(19) Europäisches Patentamt / European Patent Office / Office européen des brevets

(11) **EP 1 925 960 A2**

(12) **EUROPEAN PATENT APPLICATION**

(43) Date of publication:
   **28.05.2008 Bulletin 2008/22**

(51) Int Cl.:
   ***G02B 17/08*** (2006.01)   ***H04N 5/74*** (2006.01)

(21) Application number: **07254574.2**

(22) Date of filing: **26.11.2007**

(84) Designated Contracting States:
   **AT BE BG CH CY CZ DE DK EE ES FI FR GB GR HU IE IS IT LI LT LU LV MC MT NL PL PT RO SE SI SK TR**
   Designated Extension States:
   **AL BA HR MK RS**

(30) Priority: **27.11.2006 JP 2006319141**

(71) Applicant: **Hitachi, Ltd.**
   **Chiyoda-ku**
   **Tokyo 100-8280 (JP)**

(72) Inventor: **Ogura, Naoyuki,**
   **c/o Hitachi, Ltd. Property Group**
   **Chiyoda-ku**
   **Tokyo 100-8220 (JP)**

(74) Representative: **Calderbank, Thomas Roger et al**
   **Mewburn Ellis LLP**
   **York House**
   **23 Kingsway**
   **London WC2B 6HP (GB)**

(54) **Image projection apparatus**

(57)   An image projection apparatus (i.e., a projector), having a light source unit 200, being disposed within an inside of an about box-like housing 100, a light modulation unit 300, and a projection optic unit400 for projecting the image light from the light modulation unit, enlargedly, wherein the projection optic unit has a lens group including a plural number of lens elements, which are disposed symmetrically with respect to an optical axis, and a lens element having a configuration asymmetric with respect to the optical axis, sequentially, directing from the image display element towards projection of the light. And, further there is provided a reflectionmirror, being attached in a part of the housing, to be set up at a predetermined position along with the optical axis of the projection optic unit within an outside of the housing, and thereby reflecting the image light emitted from the projection optic unit, and further the reflection mirror has an free-curved surface configuration being asymmetric with respect to the optical axis of the projection optic unit.

**FIG.3**

EP 1 925 960 A2

**Description**

The present invention relates to an image projection apparatus, for conducting image display by projecting an image of an image display element(s), enlargedly, upon a projection surface, such as, a screen, etc., and in particular, it relates to an image projection apparatus, for enabling to obtain a rectangular projection image, with compensating/reducing distortion on the projection image accompanying with projection from an oblique direction thereof.

Conventionally, there are already known various kinds of image projection apparatuses (i.e., so-called a "projector"), for enlargedly projecting lights from a light source, after passing said lights through an image displayed on a liquid crystal image display element(s), upon a screen (i.e., a projection surface) via a projection optic unit, which is constructed with a plural number of lenses, and are also put into practical use thereof. For such apparatus, it is strongly required to be portable from a viewpoint of using form or mode thereof, and in particular; being small in sizes thereof, as well as, obtaining a sufficiently enlarged image on the screen, but without distortion.

By the way, conventionally, for example, in the following Patent Document 1 is already known a small-sized projector, for the purpose of enabling to project an image while exchanging between a front projection and a rear projection, wherein a mirror for use of the rear projection is built up in one body, together with a main body of the projector, thereby enabling to project a large screen even when conducting the rear projection, and also improving quality of the projection image.

Also, as is disclosed in the following Patent Documents 2 and 3, for example, there is already known a projection apparatus or an optic system for projecting an image, enlargedly, into the direction an inclined to a screen, while shifting the projection screen into the direction perpendicular to an optical axis of a projection system and also with using an additional optic system, being disposed by inclining by a predetermined angle with respect to that optical axis of the projection system. Herein, the additional optic system (i.e., afocal converter) is an optical system having a function of converting the sizes of projection image, and it is provided for obtaining a rectangular projection image with compensation/reduction upon the distortion of projection image, which is generated accompanying with the projection thereof from the inclined direction onto the screen.

In addition thereto, for example, in the following Patent Document 4 is already known a reflection-type image forming optical system, for projecting an image on the image display element(s) onto the screen (i.e. , the tracing surface), enlargedly, but with using a plural number of reflection mirrors in the place of the lenses mentioned above (i.e., the optic elements within a transmitting system).

[Patent Documents 1] Japanese Patent Laying-Open No. 2006-259252 (2006);

[Patent Documents 2] Japanese Patent Laying-Open No. Hei 5-134213 (1993);

[Patent Documents 3] Japanese Patent Laying-Open No. 2000-162544 (2000); and

[Patent Documents 4] Japanese Patent Laying-Open No. 2004-157560 (2004).

Thus, when projecting an image onto the screen from direction inclined thereto by the image projection apparatus (i.e., the projector) described in the Patent Documents 1 mentioned above, then so-called trapezoidal distortion is generated on the projected image. For dissolving this, within structures of the projection optic unit, described in the Patent Documents 2 mentioned above, the trapezoidal distortion is suppressed with bringing the additional optic system (i.e., the afocal converter) to be eccentric, which is disposed on a screen side. However, for lenses for building up such the eccentric additional optic system, it is difficult to widen the lens angle thereof, and for that reason, it is necessary to make the distance large from the projection apparatus up to the screen, for obtaining a projection image to have a necessary magnification. And, also the distance is large between the projection screen and the projection system. For this reason, there is a problem that the entire of the apparatus comes to be large (in particular, the length in direction of an optical axis of the optic unit). In addition to the above, it is necessary to provide an additional optic system having a large aperture, as a lens for building up the additional optic eccentric additional optic system mentioned above, but accompanying this, it also results into a reason of rising up the costs of the projection optic unit.

Also, within the projection optic unit described in the Documents 3 mentioned above, similar to that shown in the Documents 2 mentioned above, it is difficult to widen the lens angle due to low magnification thereof, and fit is also difficult to manufacture it, because of the necessity of making the lenses applied eccentric with, separately, and further, in addition thereto, it also necessitates the additional optic system having the large aperture; thereby resulting into a reason of increasing of costs of the projection optic unit.

On the other hand, with the reflection-type image forming optic system described in the Patent Document 4 mentioned above, it aims to obtain a wide angle of view while suppressing large-sizing of the image forming optic system, with applying the reflection-type image forming optic system (i.e., reflection mirrors) in the place of the conventional image forming optic system of transmission-type. However, because an amount of eccentricity (ordeflection) is large upon the reflectionmirror, itisdifficult to dispose a plural number of reflection mirrors at correct positions, including inclining angles thereof, and also the inclining angles of the reflection mirrors can be changed, easily, due to vibration, within an apparatus, and therefore it has a problem that it is very difficult to manufacture such the apparatus.

Then, according to the present invention, it is a preferred aim to provide an image projection apparatus, being suitable for achieve compact sized of an outer configuration, while enabling a wide angle, but without enlarging an outer configuration thereof, as well as, relatively easy in small-sizing thereof, i.e. , without necessity of the additional optic system having a large aperture, and without generation the trapezoidal distortion in the projection image or screen.

According to the present invention, for accomplishing the object mentioned above, firstly there is provided an image projection apparatus for projecting an image on an image display element, enlargedly, comprising: ahousinghavinganaboutbox-like shape thereof; a light source portion, being disposed within an inside of said housing, and having a light source therein; a light modulation portion, being disposed within an inside of said housing, and for forming an image light by modulating a light from said light source through said image display element; and a projection optic portion, being disposed within an inside of said housing, and for projecting the image light from said light modulation portion, enlargedly, wherein said projection optic portion has a lens group including a plural number of lens elements, which are disposed symmetrically with respect to an optical axis, and a lens element having a configuration asymmetric with respect to said optical axis, sequentially, directing from said image display element towards projection of the light, and further there is provided a reflection mirror, being attached in a part of said housing, to be set up at a predetermined position along with the optical axis of said projection optic portion within an outside of said housing, and thereby reflecting the image light emitted from said projection optic portion, and further said reflection mirror has an free-curved surface configuration being asymmetric with respect to the optical axis of said projection optic portion.

Also, according to the present invention, within the image projection apparatus described in the above, it is preferable that said reflection mirror is mechanically combined with to be movable with respect to said housing, and it is preferable, further comprising an electric power source portion within an inside of said housing, wherein plane sizes of said about box-like shaped housing is within 30cm × 30cm. Or, it is also preferable that an optical axis of said light source unit and an optical axis of said light modulation unit are inclined with each other by a predetermined angle.

According to the present invention mentioned above, there can be obtain superior effects of enabling to provided the image projectionapparatus, forprojectinga suitable image, enlargedly, but without generation of the trapezoidal distortion in the projection image or screen, as well as, achieving the small-sizing thereof, and also enabling the wide angle, easily, but without necessity of the additional optic system having the large aperture.

Those and other objects, features and advantages of the present invention will become more readily apparent from the following detailed description when taken in conjunction with the accompanying drawings wherein:

Fig. 1 is a perspective view for showing the entire of an image projection apparatus, according to an embodiment of the present invention;

Fig. 2 is a side view of the image projection apparatus, according to the present invention;

Fig. 3 is a partial explosive and perspective view of an optic unit including a light modulation unit and a projection optic unit, in particular, within the image projection apparatus, according to the present invention;

Fig. 4 is a cross-section view for showing the basic structures of the projection optic unit, in particular, within theimageprojection apparatus,according to thepresentinvention;

Fig. 5 is a perspective view for showing an example of lens arrangement of the projection optic unit, within the image projection apparatus, according to the present invention;

Figs. 6 (a) and 6 (b) show cross-section views in the vertical direction and the horizontal direction, for explaining the lens surfaces in the projection optic unit mentioned above;

Fig. 7 is a cross-section view in the vertical direction and the horizontal direction, for explaining a variation of the lens surfaces in the projection optic unit mentioned above;

Fig. 8 is a Y-Z cross-section for showing light paths, according to the projection optic unit mentioned above;

Fig. 9 is a X-Z cross-section for showing light paths, according to the projection optic unit mentioned above;

Fig. 10 is a view for showing performances when changing a projection distance within the projection optic unit mentioned above;

Figs. 11 (a) to 11 (c) are views for showing conditions where a rear lens group is moved within the projection optic unit mentioned above; and

Figs. 12(a) and 12(b) are perspective views, including a partial cross-section thereof, for showing the structures of moving the rear lens group within the projection optic unit mentioned above, in the image projection apparatus mentioned above.

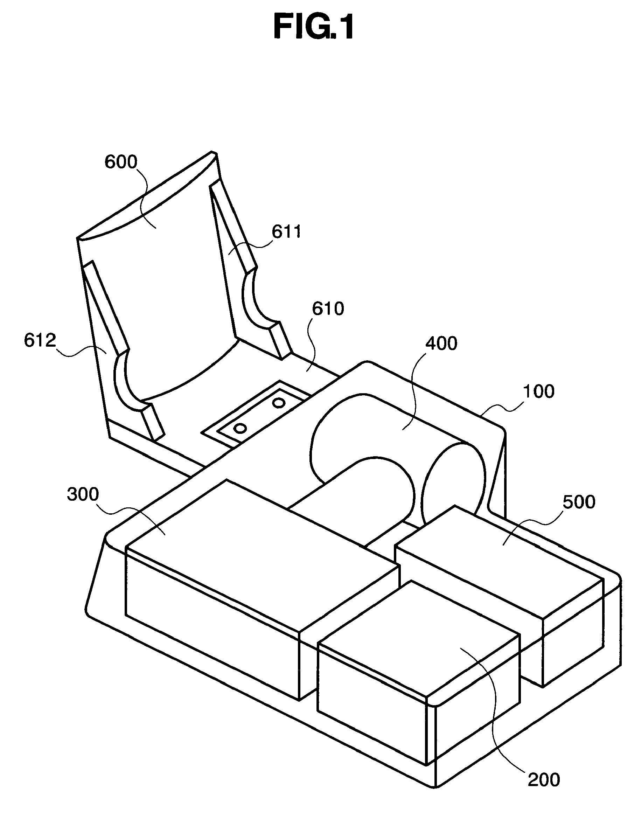

Hereinafter, embodiments according to the present invention will be fully explained by referring to the attached drawings. Fig. 1 attached herewith is a perspective view for showing the entire structures of a projection image display apparatus (i.e., a projector), and in this figure is shown constituent elements, which are stored or received within an about box-like housing 100 (external sizes: 30cm x 30cm) being provided with a cutoff portion in a part of a main body of said projection apparatus.

First of all, within an inside of this housing 110 are provided a light source unit 200, including a lamp, for irradiating white light of high intensity, such as, a mercury lamp, a halogen lamp or the like, and a light condenser mirror, etc., a light modulation unit 300, including image display elements therein, each displaying a video or picture inputted from an external personal computer, for example, and for modulating the lights irradiated from the light source unit 200 mentioned above through the said image display elements, a projection optic unit 400 for irradiating the lights emitting from the said light modulation unit 300, and an electric power source unit 500 for inputting an electric power from a commercial power source so as to supply necessary voltage/current to each of those units mentioned above, for example. And, further, in a part of the housing 100 (i.e., in a portion of the left-upper side surface thereof, in the figure) is provided or attached a free-curved surface mirror 600, which will be also explained in more details thereof in later, to be rotatable, through a plate-like member 610 covering over an emission opening of lights. However, reference numerals 611 and 612 within the figure depict so-called reinforcement members, for reinforcing the free-curved surface mirror 600 on both sides thereof, as well as, for fixing it at a tip of the plate-like member 610 at a predetermined angle.

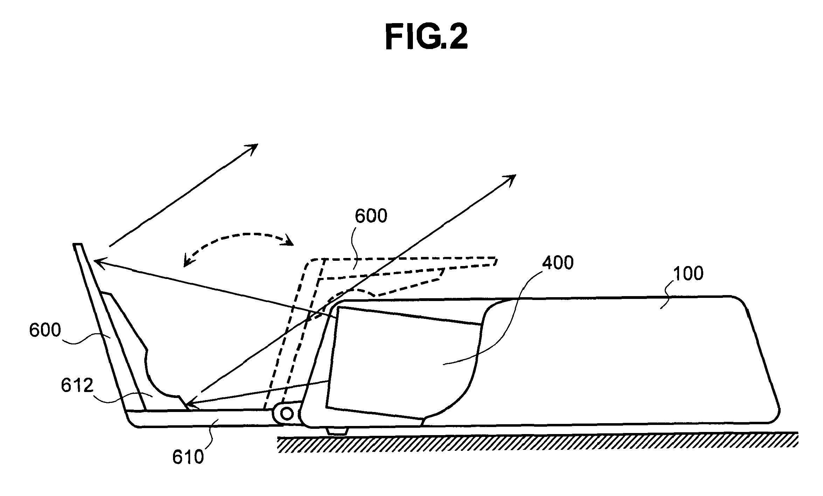

Thus, as is shown in Fig. 2 attached herewith, the plate-like member 610 fixed at a low end of the free-curved surface mirror 600 mentioned above is mechanically connected with, by means of a bearing portion 111, which is formed in a part of the hosing of the image projection apparatus mentioned above (i.e., at the lower end portion of the left-side surface of the housing, in the example shown in the figure), and as shown by broken lines in the figure, it is attached to be rotatable around the said bearing portion 111. However, in this figure, the arrows show the lights emitting from the projection optic unit 400 mentioned above and being reflected upon the surface of the free-curved surface mirror 600.

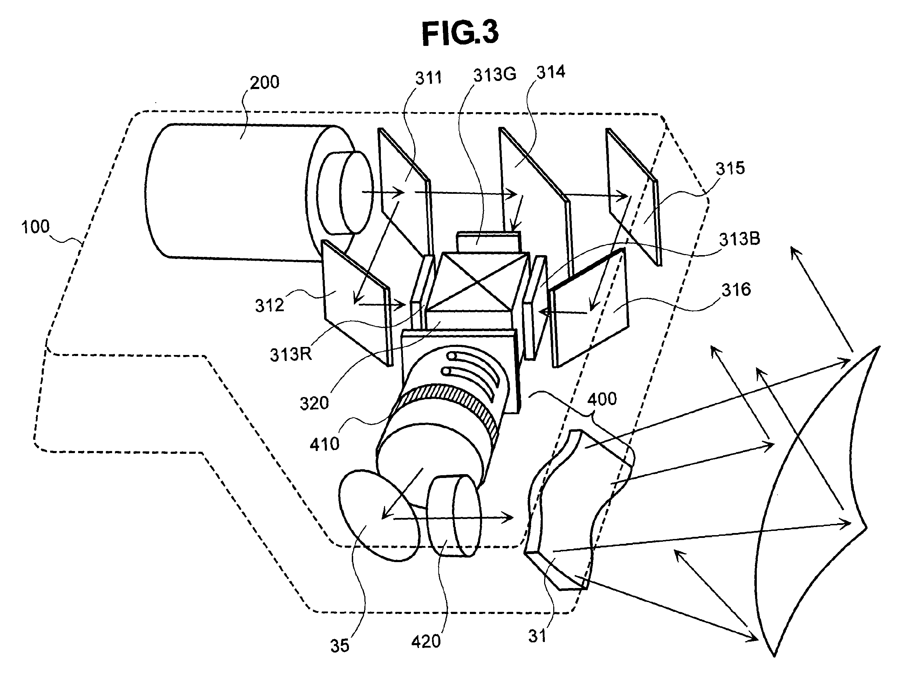

Next, by referring to Fig. 3 attached herewith, explanation will be made upon the optic elements, mainly, such as, the light source unit 200, the light modulation unit 300, the projection optic unit 400, and the free-curved surface mirror 600 mentioned above, within the image projection apparatus, the outline structures of which was shown in the above.

Not shown in the figures, a part of the lights from the light source unit 200, including the lamp generating the white lights of high intensity and the light condenser mirror, etc., within an inside thereof, is guided, for example, onto a transparent-type liquid crystal panel 313R for use of a red color (R), being the liquid crystal image display element, through a half-mirror 311 and a mirror 312, which build up the light modulation unit 300, and other portion thereof onto a transparent-type liquid crystal panel 313G for use of a green color (G), through the half-mirror 311 and a second half-mirror 314, and the remaining part thereof onto a transparent-type liquid crystal panel 313B for use of a blue color (B), through the half-mirror 311 and the second half-mirror 314, and further mirrors 315 and 316, respectively, thereby being modulated in accordance with the video or pictures to be displayed. Thereafter, those lights modulated are composed to be a color picture light to be projected by means of a light-composing prism 320. Thereafter, the color picture light composed by the light-composing prism 320 is projected upon the screen or the like not shown in the figure, as is shown by the arrows in the figure, through the projection optic unit 400, including a front lens group 410 and a rear lens group 420, and further through the free-curved surface mirror 600, as will be explained in more details thereof hereinafter.

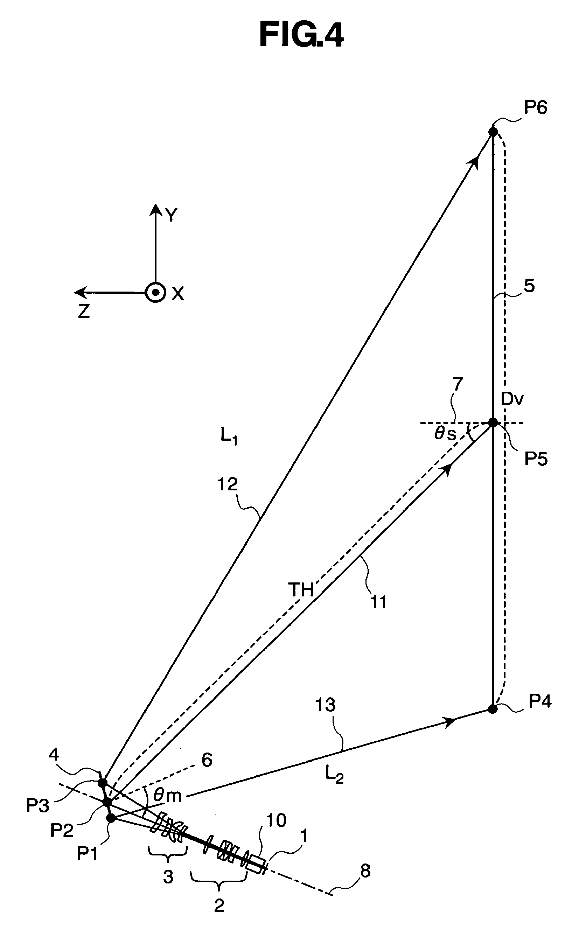

Next, by referring to the cross-section view of Fig. 4 attached herewith, explanation will be made on the fundamental or basic optical structures of the projection optic unit building up the image projection apparatus mentioned above. However, the XYZ perpendicular coordinates shown in this figure is set up with a plane, upon which the color picture light composed by the light-composing prism 320 is projected, to be a XY plane, and wherein an optical axis of the projection optic unit mentioned above fits or corresponds to the YZ cross-section.

As is shown in this Fig. 4, a projection optic unit comprises an image display element 1 (corresponding to three (3) pieces of the liquid crystal panels 313R, 313G and 313B shown in Fig. 3. But, herein only one piece thereof is shown) and a prism 10 (corresponding to the light-composing prism 320 shown in Fig. 3), for receiving a light from a light source 8 (corresponding to the light source unit 200 shown in Fig. 1 or 3) and emitting a desired image or picture therefrom, a transmission (lens) optic system, being constructed with two (2) lens groups, including a front lens group 2 and a rear lens group 3, and a reflection optic system, including a reflection mirror (herein after, being called a "free curved Surface mirror") 4 having a reflection surface of a free curved surface (corresponding to 600 shown in Fig. 3), i.e., not rotationally symmetric (rotationally asymmetric).

Within the projection optic unit having such the structures as was mentioned above, the light emitted from the image display element 1 mentioned above through the prism 10 is firstly incident upon the front lens group 2 building up the lens optic system. Though the details thereof will be explained later, but this front lens group 2 is constructed with a plural number of dioptric lenses, each having a rotationally symmetric surface configuration of a positive or a negative power. Thereafter, the light emitted from this front lens group 2 passes through the rear lens group 3, which is constructed with a plural number of lenses, including a plural number (two (2) pieces in this example) of lenses, each having the sculptured or free curved surface at least on one surface thereof, i.e., not rotationally symmetric (rotationally asymmetric). And, the light emitted from this rear lens group 3, further after being reflected enlargedly, upon a reflection optic system, including the reflection mirror (hereinafter, being called "free curved (or sculptured) surface mirror") 4, having the reflection surface of the free curved surface, not rotationally symmetric, it is projected onto a predetermined screen 5 (for example, a wall surface of a room or a sheet-like screen, etc.).

However, within the present embodiment, as is apparent from this Fig. 4 mentioned above, differing from the optic system shifting the projection screen (i.e., the display element) into the direction perpendicular to the optical axis of the projection system, and further disposing the additional optic system inclined by a predetermined angle with respect to the optical axis of the projection system, as disclosed in the conventional art (in particular, the Patent Documents 2 and 3 mentioned above), the image display element 1 is so arranged that a center of the display screen thereof is approximately positioned on the optical axis of the optic system (i.e., defining a coaxial optic system). Accordingly, the light beam 11 directing to a center of the image on the screen 5, emitting from a center of the display screen of the image display element 1 and passing through a center of an entrance pupil of the lens optic system, propagates along the optical axis of the lens optic system (including the front lens group 2 and the rear lens group 3 mentioned above), approximately, (hereinafter, those will be called a "picture center light"). Thereafter, this screen center light 11, after being reflected on a point P2 upon the reflection surface 4 having the free curved surface of the reflection optic system (including the sculptured surface mirror), is incident upon a point 5 at a center of the image on the screen 5, obliquely, from a lower side with respect to a normal line 7 of the screen. Hereinafter, this angle is called an "oblique incident angle" and is presented by "$\theta s$". This means that, the light passing along the optical axis of the lens optic system is incident upon the screen, inclining to the screen, and it is substantially equal to provide the optical axis of the lens system inclining to the screen (i.e., an oblique incidence system).

However, normally, as was mentioned above, an oblique incidence of the light upon the screen produces various kinds of aberrations, including so-called a trapezoidal distortion, i.e., an oblong configuration of projection from the image display element 1 becomes a trapezoid, and also other than that, due to the rotational asymmetry to the optical axis, etc., but according to the present invention, those are compensated upon the reflection surfaces of the rear lens group 3, which builds up the lens optic system mentioned above, and also those of the reflection optic system.

In particular, with the oblique incidence of the light projected from the image display element 1 mentioned above upon the screen 5, after being reflected upon the reflection surface of the reflection mirror 4 building up the reflection optic system mentioned above, since it enables to obtain an eccentricity (i.e. , the deflection angle) much larger, being much larger comparing to that obtained through the lenses building up the lens optic system, and also it hardly produces the aberrations, therefore it is possible to suppress large-sizing of the apparatus, as well as, to obtain the wide angle of view. Thus, it is possible to build up the lens optic system, including the front lens group 2 and the rear lens group 3 mentioned above, as an optic system to be much smaller in the aperture thereof, comparing to that of the structures offsetting the additional optic system (i.e., an afocal converter) of the conventional technology mentioned above (in particular, the Patent Documents 1 and 2 mentioned above), thereby to suppress the trapezoidal distortion.

Also, since the light incident upon the reflections surface of the reflection mirror 4, which builds up the reflection optic system mentioned above, is projected while being enlarged up to a predetermined size or magnitude thereof through the lens optic system mentioned above, as was mentioned above, therefore it is easy to be manufactured, comparing to the conventional structures, building up an enlarging projection system with only the reflection mirror (for example, the Patent Document 4 mentioned above). Thus, the lens optic system is manufactured, separately from the reflection optic system, and thereafter it is fixed within a housing of the apparatus with adjusting the positions of both of those; i.e., obtaining the structures being suitable, in particular, for mass production thereof. Also, with such the structures of disposing the rear lens group 3 for compensating the trapezoidal distortion, etc., in front of the above-mentioned front lens group 2, as was mentioned above, since the rear lens group 3 and the front lens group 2 can be disposed while reducing the distance between them, it is possible to achieve the apparatus (i.e., the projector), being compact as a whole thereof, mounting the said projection optic unit therein, and also to obtain a preferable effect of enabling to reduce the height, in particular, below the screen.

In this manner, combining the transmission type lens optic unit having the free curved surface and the reflection optic system having the free curved surface, in particular, in case when applying it into the projector, as an image projection apparatus, it is possible to obtain small-sizing of the apparatus as a whole, while achieving the wide angle of view, which is strongly required for that projection apparatus, with certainty and relatively easily.

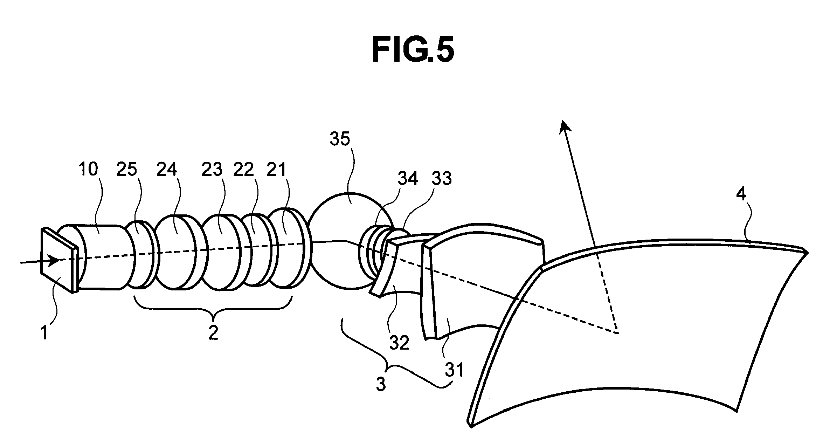

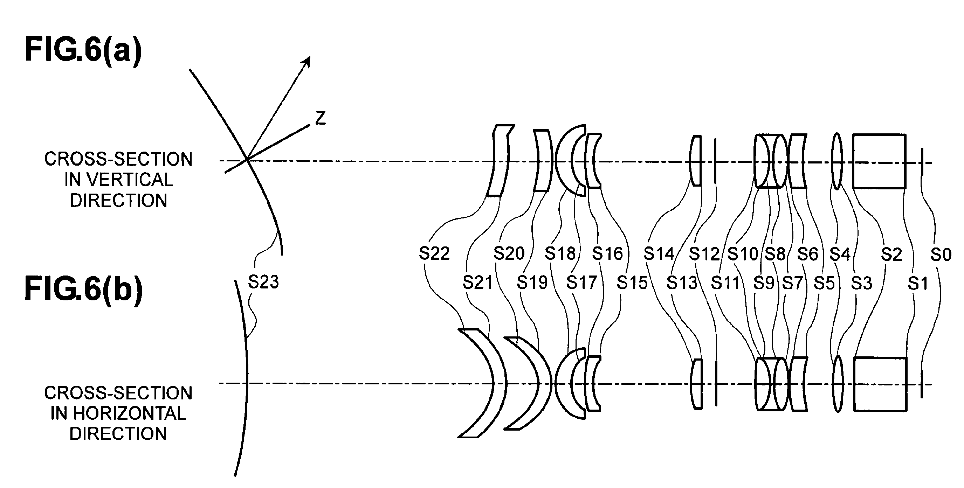

Next, Figs 5 and 6(a) and 6(b) shows the lens surfaces of optical elements within the projection optic unit, including the reflection optic system therein. Thus, Fig. 5 is a perspective view of the projection optic system mentioned above, and Fig. 6(a) shows a cross-section in the vertical direction thereof, while Fig. 6(b) a cross-section in the horizontal direction thereof, respectively.

As is shown in those figures, within the lens optic system, an image emitted from the image display element 1 through the prism 10 is firstly incident upon the front lens group 2, including a plural number of lenses therein, which has the rotationally symmetric configuration. As was mentioned above, the front lens group 2 includes a spherical lens, being rotationally symmetric, and also an aspheric lens therein. However, the reference numeral 35 in those figures depicts a bending mirror 35, which is disposed between the front lens group 2 and the rear lens group 3.

Also, the rear lens group 3 is constructed with at least two (2) pieces of free curved or sculptured surface lenses. As is shown in those figures, a free curved surface lens 31, nearest to the reflection surface S23 of the reflection mirror 4, directs a concave into the direction of light emission, and a curvature of a portion, where the light passes through to be incident upon a low end of that screen, is determined to be larger than that of a portion, where the light passes through to be incident upon an upper end of that screen. Thus, it is assumed that, the free curved or sculptured surface lens has such a configuration, i.e., being curved directing the concave into the direction of emission of that light, and having the curvature in the portion where the light passes through to be incident upon the low end of that screen, being larger than that in a portion where the light passes through to be incident upon the upper end of that screen.

Also, according to the present embodiment, it is constructed to fulfill the following condition. Thus, within the cross-section shown in Fig. 4 mentioned above, it is assumed that the light incident upon a point P6 at an upper end of picture on the screen 5, being emitted from a lower end of screen on the image display element 1 and passing through a center of the entrance pupil of the front lens group 2, is a light 12. It is assumed that an optical path length is "L1" for this light 12 to reach the point P6 from a point P3 where this light 12 passes through the free curved surface mirror 4. Also, it is assumed that the light incident upon a point P4 at the lower end of picture on the screen 5 is a light 13, being emitted from the upper end of screen of the image display element 1 and passing through the center of the entrance pupil of the front lens group 2. It is assumed that the optical pass length is "L2" for this light 13 to reach the point P4 from the point P1 where this light 13 passes through the free curved surface mirror 4. And, the projection optic unit mentioned above is so constructed that the "L1" and the "L2" satisfy the following equation:

<Eq. 1>

$$|L1 - L2| < 1.2 * \sin\theta s * Dv$$

However, where "Dv" is a size of the picture on the screen, within the cross-section shown in Fig. 4, and in other words, it is a distance from the point P6 at the upper end of picture to the point P4 at the lower end thereof on the screen. Also, "θs" is the oblique incident angle mentioned above.

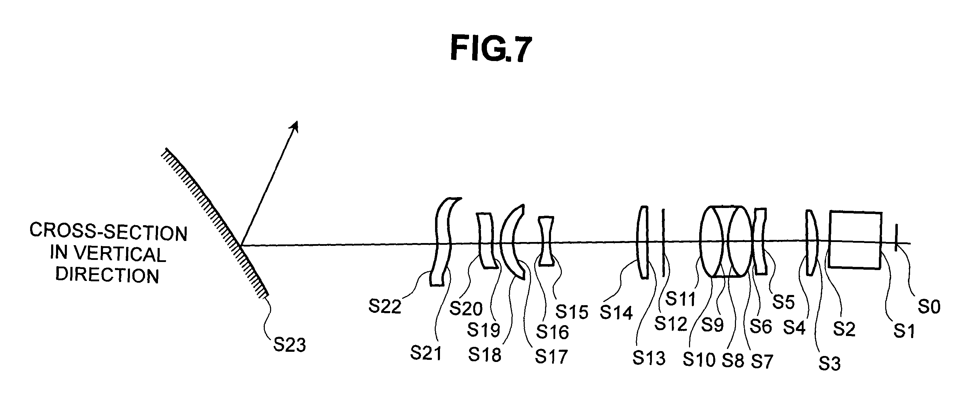

On the other hand, although the image display element 1 mentioned above is disposed in such a manner that the center of the display screen thereof is located on the optical axis of the lens optic system mentioned above, or alternatively, it may be preferable to dispose it in such a manner that the normal line on the said display screen is inclined a little bit to the optical axis of the lens optic system mentioned above, as is shown in Fig. 7 attached herewith.

Further, judging from seeing Fig. 4, as was mentioned previously, the optical path length reaching from the point P3 to the point P6 is longer than the optical path length reaching from the point P1 to the point P4. This means that the image point P6 is farther from than the image point P4. Then, if an object point (i.e., a point in the display screen) corresponding to the image point P6 on the screen is located at a point nearer to the lens optic system and also if an object point corresponding to the image point P4 is located at a position farther from the lens optic system, it is possible to compensate the inclination of an image surface. For that purpose, as will be shown in Fig. 7, it is preferable to incline a normal line vector at a center on the display screen of the image display element 1, a little bit, with respect to the optical axis of the lens optic system, within a plane defined to include the normal line of the screen 5 and the light at the center of the screen therein. And, it is preferable that the direction of that inclination is opposite to the direction into which the screen 5 is positioned.

Further, a method for inclining an abject surface for the purpose of obtaining an image surface inclined to the optical axis, however within a practical region of the angle of view, deformations asymmetric to the optical axis are produced upon the image surface, which is obtained through the inclination of the object surface, and therefore it is difficult to make compensation by means of a projection lens, which is rotationally symmetric. According to the present embodiment, because of applying the free curved surface lens 31 and further also the free curved surface lens 32, which are rotationally asymmetric, within the rear lens group 3 mentioned above, it is possible to treat with the deformations upon the asymmetric image surface. For this reason, inclination of the object surface, i.e., the display surface of the image display element, enables to reduce the distortions of low dimensions on the image surface, greatly, and therefore it is effective for assisting the compensation of aberrations due to the free curved surface.

Next, with the function of each of the optical elements mentioned above, in particular, within the lens optic system mentioned above, the front lens group 2 (i.e., lenses 21 to 25), they build up a main lens for projecting the display screen of the image display element 1 onto the screen 5, and also compensate the basic aberrations within the optic system that is rotationally symmetric. And, the rear lens group 3 (i.e., lenses 31 to 34) within the lens optic systemmentioned above, they are made up with lenses, each having the free curved surface, being not rotationally symmetric (i.e., rotationally asymmetric). Further, since the reflection optic system 4 mentioned above is built up with the reflection surfaces, each having the free curved surface configuration that is not rotationally symmetric, then it mainly compensates the aberration, which is produced due to the oblique incidence of the light. Thus, within such the structures as was mentioned above, the mirror 4 building up the reflection optic system mentioned above mainly compensates the trapezoidal distortion, while the rear lens group 3 of the lens optic system mainly compensate the asymmetric aberrations, such as, the distortion on the image surface, etc.

As was mentioned above, according to the present embodiment, the reflection optic system mentioned above is built up with one (1) piece of the reflection surface (i.e., mirror) 4 having the free curved surface configuration that is not rotationally symmetric, while the rear lens group 3 of the lens optic system mentioned above includes two (2) pieces of the transmission-type lenses (i.e., the lenses 31 and 32 on the side of reflection mirror 4), in the structures thereof. Herein, the free curved surface mirror 4 is curved directing a convex into the direction of reflection. And, a curvature on a portion of the free curved surface mirror 4, reflecting the light to be incident upon a lower end of the screen, is determined to be larger than the curvature of a portion thereof, reflecting the light to be incident upon an upper end of the screen. Or, a portion reflecting the light to be incident upon the lower end of the screen may be defined into a configuration convex to the reflecting direction of the light, on the other hand, a portion reflecting the light to be incident upon the upper end of the screen into a configuration concave to the reflecting direction thereof.

The distance between an origin of coordinates on the reflection surface (i.e., the mirror) 4 of the reflection optic system and the lens surface nearest to the reflection surface (i.e., the mirror) 4 among the front lens group 2, in the direction of the optical axis, it is preferable to be set as five (5) times large as the focus distance of the front lens group 2 or more than that. With this, it is possible to compensate the trapezoidal distortion by the reflection surface of the reflection optic system, having the free curved surface configuration, more effectively, and thereby obtaining a preferable performance.

Hereinafter, explanation will be made on the numerical values of the embodiment, according to the present embodiment.

<Embodiment 1>

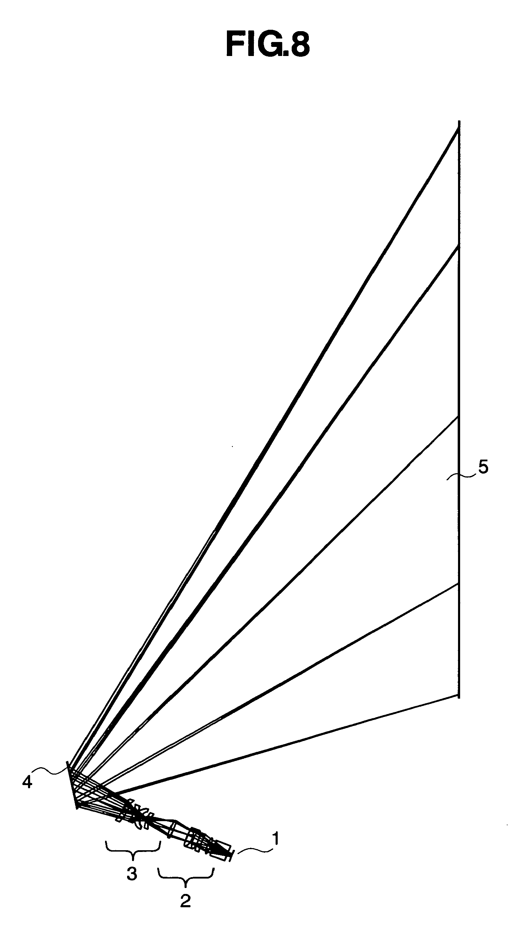

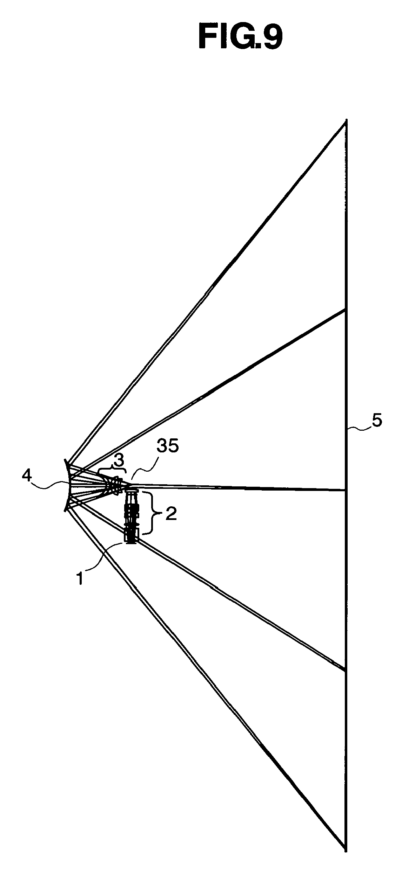

Firstly, explanation will be made on the details of the projection optic unit, according to the present embodiment explained in the above, by referring to Figs. 8 and 9 attached herewith and further tables 1 to 4 below, while showing the detailed numerical values of the optical elements, including the lens optic system and the reflection optic system therein. However, Figs. 8 and 9 attached herewith are diagrams for showing light beams in the optic system according to the present invention, upon basis of an example of first numerical values. Thus, within XYZ rectangular coordinates system shown in Fig. 2 mentioned above, Fig. 8 shows the Y-Z cross-section, i.e., extending the optic system into the Z-axis direction. Also, Fig. 9 shows the structures on X-Z cross-section, and in this Fig. 9 shows is disposed the bending mirror 35 on the way between the front lens group 2 and the rear lens group 3 building up the lens optic system, as is shown in the details thereof in Figs. 5 and 6, and thereby bending the light path into the X-axis direction, once.

In the present embodiment, the light emitted from the image display element 1, which is below in Fig. 8, firstly passes through the front lens group 2 built up with only lenses, each having only surfaces that are rotationally symmetric, among the lens optic system including the plural number of lenses therein. Then, it passes through the rear lens group 3 including the free curved surface lens that is rotationally asymmetric, and is reflected upon the reflection surface of the free curved surface mirror 4 within the reflection optic system. Thereafter, the reflecting light thereupon is incident upon the screen 5.

Herein, the front lens group 2 of the lens optic system is built up with the plural number of lenses, all of which have a refracting interface of rotationally symmetric configuration, and four (4) of the refracting interfaces of those lenses have aspheric surfaces, each being rotationally symmetric, and others have the spherical surfaces. The aspheric surface being rotationally symmetric, which is used therein, can be expressed by the following equation, with using a local cylindrical coordinates system for each surface:

<Eq. 2>

$$Z = \frac{cr^2}{1+\sqrt{1-(1+k)c^2 r^2}} + A \cdot r^4 + B \cdot r^6 + C \cdot r^8 + D \cdot r^{10} + E \cdot r^{12} + F \cdot r^{14} + G \cdot r^{16} + H \cdot r^{18} + J \cdot r^{20}$$

Where, "r" is the distance from an optic axis, and "Z" represents an amount of sag. Also, "c" is the curvature at an apex, "k" a conical constant, "A" to "J" coefficients of a term of power of "r".

On the other hand, the free curved surfaces building up the rear lens group 3 of the lens optic system mentioned above can be expressed by the following equation (Eq. 3), including polynomials of X and Y, with applying the local coordinates system (x, y, z) assuming the apex on each surface to be the origin.

<Eq. 3>

$$Z = \frac{cr^2}{1+\sqrt{1-(1+k)c^2 r^2}} + \sum_m \cdot \sum_n (C(m,n) \cdot x^m \cdot y^n)$$

Where, "Z" represents an amount of sag of the free curved surface configuration, in particular, into the direction perpendicular to X- and Y-axes, "c" the curvature at the apex, "r" the distance from the origin within a plane of X- and Y-axes, "k" the conical constant, and "C(m,n)" the coefficients of the polynomials.

Next, the following table 1 shows the numerical data of the optic system, according to the present embodiment. In this table 1, S0 to S23 correspond to the marks S0 to S23 shown in Fig. 6 mentioned above, respectively. Herein, the mark S0 shows the display surface of the image display element 11, i.e., the object surface, and S23 the reflection surface of the free curved surface mirror 5. Also, though not shown in those figures, but a mark S24 shows an incident surface of the screen 5 shown in Fig. 4 mentioned above, i.e., the image surface.

Table 1

| Surface | Rd | TH | nd | vd |
|---|---|---|---|---|
| S0 | Infinity | 10.00 | | |
| S1 | Infinity | 31.34 | 1.51827 | 48.0 |
| S2 | Infinity | 7.06 | | |
| S3 | 246.358 | 4.65 | 1.85306 | 17.2 |
| S4 | -84.858 | 18.00 | | |
| S5* | -83.708 | 9.00 | 1.49245 | 42.9 |
| S6* | -75.314 | 0.10 | | |
| S7 | 41.651 | 9.32 | 1.49811 | 60.9 |
| S8 | -42.282 | 2.50 | 1.76014 | 20.0 |
| S9 | 29.550 | 0.10 | | |
| S10 | 29.476 | 9.00 | 1.49811 | 60.9 |
| S11 | -79.153 | 25.90 | | |
| S12 | Infinity | 9.10 | | |
| S13 | -265.353 | 6.00 | 1.85306 | 17.2 |
| S14 | -53.869 | 65.00 | | |
| S15 | -24.898 | 4.19 | 1.74702 | 33.2 |

(continued)

| Surface | Rd | TH | nd | vd |
|---|---|---|---|---|
| S16 | -58.225 | 9.00 | | |
| S17* | -27.332 | 10.00 | 1.49245 | 42.9 |
| S18* | -32.424 | 2.50 | | |
| S19# | Infinity | 8.00 | 1.49245 | 42.9 |
| S20# | Infinity | 20.51 | | |
| S21# | Infinity | 8.00 | 1.49245 | 42.9 |
| S22# | Infinity | 160.99 | | |
| S23# | Infinity | -705.00 | REFL | |

Also, in the table 1 mentioned above, "Rd" is the radius of curvature for each surface, and it is presented by a positive value in case when having a center of curvature on the left-hand side of the surface in Fig. 6 mentioned above, while by a negative value in case when having it on the right-hand side, contrary to the above. Also, "TH" is the distance between the surfaces, i.e., presenting the distance from the apex of the lens surface to the apex of the next lens surface. The distance between the surfaces is presented by a positive value in case when the next lens surface is at the left-hand side, while by a negative value in case when it is at the right-hand side, with respect to that lens surface.

Further, in the table 1 mentioned above, S5, S6, S17 and S18 are aspheric surfaces, being rotationally symmetric, and also in this table 1, they are attached with "*" beside the surface numbers for easy understanding thereof, wherein coefficients of the aspheric surface of those four (4) surfaces are shown in the table 2 below.

Table 2

| Surface | | Aspheric Surface Coefficients | | | | | | |
|---|---|---|---|---|---|---|---|---|
| S5 | K | -11.7678542 | C | -1.159E-11 | F | 2.298642E-20 | J | -1.255E-26 |
| | A | -2.7881E-06 | D | -3.2834E-14 | G | 1.05201E-21 | | |
| | B | 9.67791E-09 | E | 1.09359E-16 | H | 1.96001E-24 | | |
| S6 | K | -5.4064901 | C | 2.0324E-12 | F | 3.0211E-19 | J | -1.4982E-26 |
| | A | 6.14967E-07 | D | -2.2078E-14 | G | 4.30049E-22 | | |
| | B | 4.60362E-09 | E | -8.0538E-17 | H | 4.79618E-24 | | |
| S17 | K | 1.106429122 | C | -9.0262E-11 | F | -1.0521E-18 | J | -6.0837E-26 |
| | A | -1.1068E-05 | D | -1.3984E-13 | G | -8.1239E-23 | | |
| | B | 7.21301E-08 | E | 3.1153E-16 | H | 3.86174E-23 | | |
| S18 | K | 0.742867686 | C | -2.2719E-11 | F | 1.09398E-19 | J | 9.02232E-29 |
| | A | 1.51788E-07 | D | -4.6853E-14 | G | 1.62146E-22 | | |
| | B | 2.10472E-08 | E | 2.9666E-17 | H | -3.0801E-25 | | |

Also, S19 to S22 in the table 1 mentioned above are the refraction surfaces, each having the free curved surface configuration, which builds up the rear lens group of the lens optic system mentioned above, and S23 is the reflection surface having the free curved surface configuration S23 of the reflection optic system, wherein they are shown by attaching "#" beside the surface numbers thereof. Values of the coefficients for presenting the configurations of those five (5) free curved surfaces are shown in the table 3 below.

Table 3

| Surface | Aspheric Surface Coefficients | | | | | | |
|---|---|---|---|---|---|---|---|
| | | | C17 | 5.38933E-07 | C34 | -1.2381E-09 | C51 | -7.4126E-14 |
| | K | 0 | C19 | 8.33432E-07 | C36 | 1.13944E-09 | C53 | 2.05074E-12 |
| | C4 | 0.013500584 | C21 | -4.6367E-08 | C37 | 3.87771E-12 | C55 | -9.2166E-13 |
| | C6 | 0.003493312 | C22 | -6.2643E-09 | C39 | 1.04779E-11 | C56 | -2.5867E-15 |
| S19 | C8 | -0.00083921 | C24 | -2.2449E-08 | C41 | 1.80038E-11 | C58 | -8.7122E-15 |
| | C10 | -0.00032098 | C26 | -5.6706E-08 | C43 | 5.23019E-11 | C60 | 2.85321E-14 |
| | C11 | 8.59459E-06 | C28 | 9.69952E-10 | C45 | 1.69253E-11 | C62 | -8.5084E-14 |
| | C13 | 2.14814E-06 | C30 | -1.1968E-10 | C47 | -2.7E-14 | C64 | 1.25198E-13 |
| | C15 | 7.54355E-06 | C32 | -1.3638E-09 | C49 | 7.30978E-13 | C66 | -5.6277E-14 |
| | | | C17 | 7.49262E-07 | C34 | -5.7462E-10 | C51 | -3.6141E-13 |
| | K | 0 | C19 | 1.19039E-06 | C36 | 1.27396E-09 | C53 | 8.54188E-14 |
| | C4 | 0.015488689 | C21 | -1.2953E-07 | C37 | -4.7746E-12 | C55 | -5.3469E-13 |
| | C6 | 0.006553414 | C22 | 5.115E-10 | C39 | 7.32855E-12 | C56 | 8.92545E-17 |
| S20 | C8 | -0.00116756 | C24 | -2.1936E-08 | C41 | 5.30157E-11 | C58 | -5.3434E-15 |
| | C10 | -0.00033579 | C26 | -5.9543E-08 | C43 | 5.05014E-11 | C60 | 1.96533E-14 |
| | C11 | 7.5015E-06 | C28 | 2.03972E-08 | C45 | -2.1894E-11 | C62 | -1.3923E-13 |
| | C13 | -2.5728E-06 | C30 | 1.16701E-11 | C47 | -1.2515E-13 | C64 | 1.06322E-13 |
| | C15 | -1.3543E-06 | C32 | -1.6198E-09 | C49 | 7.64489E-13 | C66 | -4.6602E-15 |
| | | | C17 | -1.0379E-07 | C34 | 2.81743E-10 | C51 | -8.1775E-15 |
| | K | 0 | C19 | 3.0082E-08 | C36 | 6.05663E-10 | C53 | 3.06022E-14 |
| | C4 | 0.015096874 | C21 | 7.95521E-08 | C37 | 8.39381E-13 | C55 | -9.1775E-13 |
| | C6 | 0.009982808 | C22 | -1.3911E-09 | C39 | 1.98531E-12 | C56 | -7.8543E-17 |
| S21 | C8 | 0.000358347 | C24 | 9.33292E-10 | C41 | 1.37477E-11 | C58 | -8.9588E-16 |
| | C10 | 0.000209267 | C26 | 3.54468E-09 | C43 | -1.0671E-11 | C60 | -6.0768E-15 |
| | C11 | -3.8593E-07 | C28 | 4.1615E-09 | C45 | 9.04109E-12 | C62 | -1.9528E-14 |
| | C13 | -6.8336E-06 | C30 | -1.2331E-11 | C47 | 2.48401E-14 | C64 | 2.6781E-14 |
| | C15 | -2.2455E-05 | C32 | -2.3367E-10 | C49 | 6.92603E-14 | C66 | -1.4324E-14 |
| | | | C17 | -3.6973E-07 | C34 | 4.8045E-10 | C51 | -2.9795E-13 |
| | K | 0 | C19 | -3.0682E-07 | C36 | 1.43328E-10 | C53 | -2.5306E-14 |
| | C4 | 0.022813527 | C21 | 4.12093E-08 | C37 | -2.0707E-12 | C55 | -3.9401E-13 |
| | C6 | 0.012060543 | C22 | 4.07969E-09 | C39 | -4.9221E-12 | C56 | 6.88651E-16 |
| S22 | C8 | 0.000638931 | C24 | 8.5986E-09 | C41 | -2.3681E-12 | C58 | 1.55006E-15 |
| | C10 | 0.000196027 | C26 | 2.1713E-08 | C43 | -2.1567E-11 | C60 | -1.4674E-15 |
| | C11 | -7.1204E-06 | C28 | 1.63499E-08 | C45 | -2.3679E-12 | C62 | -9.9822E-15 |
| | C13 | -1.269E-05 | C30 | 1.38704E-10 | C47 | -5.7167E-15 | C64 | 2.72925E-14 |
| | C15 | -2.5184E-05 | C32 | 2.02372E-10 | C49 | -9.0337E-14 | C66 | -1.1966E-14 |

(continued)

| Surface | Aspheric Surface Coefficients | | | | | | |
|---|---|---|---|---|---|---|---|
| | | | C17 | -1.1083E-09 | C34 | -4.9118E-14 | C51 | -5.4918E-19 |
| | K | 0 | C19 | -5.7768E-10 | C36 | 8.12546E-14 | C53 | -2.2569E-18 |
| | C4 | 0.001597194 | C21 | 1.60076E-10 | C37 | -7.486E-17 | C55 | -3.5657E-18 |
| | C6 | 0.001324181 | C22 | 1.91534E-12 | C39 | 6.80626E-16 | C56 | 1.09883E-21 |
| S23 | C8 | 1.37885E-05 | C24 | -1.0665E-11 | C41 | -5.1295E-17 | C58 | -2.1535E-20 |
| | C10 | 1.34349E-05 | C26 | -8.6063E-12 | C43 | -3.6526E-16 | C60 | 2.01763E-20 |
| | C11 | -4.8064E-08 | C28 | -1.1125E-12 | C45 | 1.46399E-15 | C62 | -1.2016E-20 |
| | C13 | 5.24071E-08 | C30 | 6.24714E-14 | C47 | -2.1563E-18 | C64 | 3.21408E-21 |
| | C15 | 9.53861E-08 | C32 | -3.4381E-14 | C49 | 2.86073E-18 | C66 | -1.4922E-19 |

Also, according to the present invention, as is shown in Fig. 7, the object surface, i.e., the display screen of the image display element 1 is inclined by -1.163 degrees to the optical axis of the lens optic system mentioned above. However, with the direction of inclination, it is assumed that a positive value presents the direction, in which the normal line on the object surface rotates into the clockwise direction within the cross-section shown this Fig. 7. Accordingly, according to the present embodiment, it means that, within the cross-section shown in Fig. 7, the object surface is inclined into the anti-clockwise direction by 1.163 degrees from the position perpendicular to the optical axis of the lens optic system mentioned above.

Also, the free curved surface mirror 4 shown by the mark S23 in Figs. 6 and 7 mentioned above is so disposed that, the normal line at the origin of the local coordinates thereof, i.e., the Z-axis is inclined by around +2 9 degree from the position in parallel with the optical axis of the lens optic system mentioned above while positioning that origin of the local coordinates on the optical axis of the lens optic system mentioned above. However, the direction of this inclination is assumed to be positive in the anti-clockwise rotating direction, within the cross-sections shown in Figs. 6 and 7, similar to that of the object surface mentioned above, and therefore, it is inclined into the anti-clockwise rotation. With this, the light at the center of the screen, emitting from the center on the screen of the image display element 1 and propagating almost along the optical axis of the lens optic system mentioned above, after reflection upon S23, it propagates into a direction inclined by 58 degrees, i.e., 2 times large as the inclination angle with respect to the optical axis of the lens optic system mentioned above (see an arrow in the figure).

Further, in the present embodiment, the conditions of the inclination and an offset of the local coordinates are shown in the table 4 below, on each of the surfaces. In this table 4, values of the inclination angle and the offset are shown on the columns on the right-hand sides of the surface number, wherein "ADE" is a magnitude of the inclination within the surface in parallel with the cross-section of figure, and a rule of display thereof is as mentioned above. Also, "YDE" is a magnitude of the offset, and the offset is set up into the direction perpendicular to the optical axis within the surface in parallel with the cross-section of the figure, and the offset below on the cross-section of Fig. 6 is assumed to be positive. However, also in the embodiments that will be explained hereinafter, the inclination and the offset of an optical element are setup to be the direction within the cross-section in parallel with the cross-section shown therein.

Table 4

| Surface | ADE(°) | YDE (mm) |
|---|---|---|
| S0 | -1.163 | 0.0 |
| S23 | 29.000 | 0.0 |

However, as be seen from the tables 1 and 3 mentioned above, according to the present embodiment, it is apparent that the curvature "c" and the conic coefficients "k" are "0". Thus, the trapezoidal distortion, being generated due to the oblique incidence, is extremely large in the direction of the oblique incidence, but the amount thereof is small in the direction perpendicular to this. Accordingly, between the direction of the oblique incidence and the direction perpendicular to this, there must be provided functions greatly different from each other, and it is possible to compensate or correct the asymmetric aberration, preferably, without using the curvature "c" nor the conic coefficient "k", being rotationally symmetric and functioning in all directions.

Also, in the table 4 mentioned above, "ADE" of the surface S23 is same to "θm" shown in Fig. 4, and "ADE" on the surface of the screen 5 is "θs", as is shown in Fig. 2 mentioned above. From the values of both of those, the condition mentioned above is satisfied or fulfilled, and therefore, there can be achieved an optic system, being compact, i.e., reducing the height below the screen.

Also, since the value of the difference |L1-L2| of the optical pat, which is shown by the equation (Eq. 1) mentioned above, is 0.42 times large as the height of picture on the screen, and "θs" is 30 degrees, then the condition of the (Eq. 1) mentioned above is satisfied. The numerical values in the tables 1 to 4 are of the cases when projecting onto the object surface, enlargedely. Thus, it is apparent that the object surface can be projected on a screen being fully large, enlargedly, even from a relatively near distance (Lp), in other words, being superior in an enlarging ratio of projection.

<Embodiment 2>

Next, explanation will be made on a second embodiment by referring to tables 5 to 8. Herein, the front lens group 2 of the lens optic system is built up with the plural number of lenses, all of which have a refracting interface of rotationally symmetric configuration, and four (4) of the refracting interfaces of those lenses have aspheric surfaces, each being rotationally symmetric, and others have the spherical surfaces. The aspheric surface being rotationally symmetric, which is used therein, can be expressed by the equation <Eq. 2> mentioned above, with using a local cylindrical coordinates system for each surface. Also, the free curved surfaces building up the rear lens group 3 of the lens optic system mentioned above can be expressed by the equation <Eq. 3> mentioned above, including polynomials of X and Y, with applying the local coordinates system (x, y, z) assuming the apex on each surface to be the origin.

The following table 5 shows lends data of the present embodiment including numerical values thereof, wherein the surface numbers starting from S0, presenting the object surfaces, sequentially, further from S1 to S23. In this table 1, "Rd" is also the radius of curvature for each surface, and "TH" is the distance between the surfaces, i.e. , presenting the distance from the apex of the lens surface to the apex of the next lens surface.

Table 5

| Surface | Rd | TH | nd | νd |
|---|---|---|---|---|
| S0 | Infinity | 10.00 | | |
| S1 | Infinity | 31.34 | 1.51827 | 48.0 |
| S2 | Infinity | 7.65 | | |
| S3 | 210.000 | 4.65 | 1.85306 | 17.2 |
| S4 | -92.276 | 18.00 | | |
| S5* | -119.154 | 9.00 | 1.49245 | 42.9 |
| S6* | -99.255 | 0.10 | | |
| S7 | 41.651 | 9.32 | 1.49811 | 60.9 |
| S8 | -43.298 | 2.50 | 1.76014 | 20.0 |
| S9 | 29.535 | 0.10 | | |
| S10 | 29.472 | 9.00 | 1.49811 | 60.9 |
| S11 | -81.846 | 25.90 | | |
| S12 | Infinity | 9.10 | | |
| S13 | -259.960 | 6.00 | 1.85306 | 17.2 |
| S14 | -54.061 | 65.00 | | |
| S15 | -24.878 | 4.19 | 1.74702 | 33.2 |
| S16 | -64.884 | 9.00 | | |
| S17* | -20.009 | 10.00 | 1.49245 | 42.9 |
| S18* | -28.982 | 2.50 | | |
| S19# | Infinity | 8.00 | 1.49245 | 42.9 |
| S20# | Infinity | 20.51 | | |

(continued)

| Surface | Rd | TH | nd | νd |
|---|---|---|---|---|
| S21# | Infinity | 8.00 | 1.49245 | 42.9 |
| S22# | Infinity | 159.95 | | |
| S23# | Infinity | -852.00 | REFL | |

In the table 5 mentioned above, S5, S6, S17 and S18 are aspheric surfaces, being rotationally symmetric, and also in this table 5, they are attached with "*" beside the surface numbers for easy understanding thereof, wherein coefficients of the aspheric surface of those four (4) surfaces are shown in the table 6 below.

Table 6

| Surface | Aspheric Surface Coefficients | | | | | | | |
|---|---|---|---|---|---|---|---|---|
| S5 | K | -23.3033479 | C | -9.6351E-12 | F | 6.40059E-20 | J | 5.14145E-27 |
| | A | -2.4809E-06 | D | -3.1244E-14 | G | -2.06E-22 | | |
| | B | 6.68597E-09 | E | 1.70809E-16 | H | -1.9587E-24 | | |
| S6 | K | -7.9521673 | C | -2.8461E-12 | F | 1.68916E-19 | J | -4.2604E-27 |
| | A | 8.81129E-07 | D | -4.2436E-16 | G | -4.7764E-22 | | |
| | B | 3.27597E-09 | E | -2.4174E-17 | H | 3.1265E-24 | | |
| S17 | K | 1.294916014 | C | -9.1246E-11 | F | -8.1666E-19 | J | -9.4083E-26 |
| | A | -1.7719E-05 | D | -1.8651E-13 | G | -7.81036E-22 | | |
| | B | 5.73314E-08 | E | 2.9427E-16 | H | 3.77766E-23 | | |
| S18 | K | 0.463935076 | C | -1.1724E-11 | F | 1.23091E-19 | J | -2.0819E-28 |
| | A | -3.417E-06 | D | -5.4303E-14 | G | 1.99428E-22 | | |
| | B | 1.57331E-08 | E | 1.37371E-17 | H | -3.49141E-25 | | |

Also, S19 to S22 in the table 5 mentioned above are the refraction surfaces, each having the free curved surface configuration, which builds up the rear lens group of the lens optic system mentioned above, and S23 is the reflection surface having the free curved surface configuration S23 of the reflection optic system, wherein they are shown by attaching "#" beside the surface numbers thereof. Values of the coefficients for presenting the configurations of those five (5) free curved surfaces are shown in the table 7 below.

Table 7

| Surface | Free curved Surface Coefficients | | | | | | | |
|---|---|---|---|---|---|---|---|---|
| S19 | | | C17 | 5.06259E-07 | C34 | -1.4837E-09 | C51 | -1.0027E-12 |
| | K | 0 | C19 | 4.85077E-07 | C36 | 1.31263E-09 | C53 | 6.99745E-13 |
| | C4 | 0.017559144 | C21 | -1.5853E-07 | C37 | 1.83299E-12 | C55 | -1.6619E-12 |
| | C6 | 0.001733207 | C22 | -5.42E-09 | C39 | -4.3583E-13 | C56 | -1.9766E-15 |
| | C8 | -0.00066382 | C24 | -1.5702E-08 | C41 | 2.72981E-11 | C58 | 1.40369E-15 |
| | C10 | -0.00013226 | C26 | -5.9063E-08 | C43 | 3.0878E-11 | C60 | 1.05828E-14 |
| | C11 | 8.28618E-06 | C28 | -7.7982E-09 | C45 | 2.26152E-11 | C62 | -8.9296E-14 |
| | C13 | 1.03545E-06 | C30 | -1.0233E-10 | C47 | 2.99348E-14 | C64 | 7.84407E-14 |
| | C15 | 8.99822E-06 | C32 | -8.8036E-07 | C49 | 4.57827E-13 | C66 | -9.1078E-14 |

(continued)

| Surface | Free curved Surface Coefficients | | | | | | | |
|---|---|---|---|---|---|---|---|---|
| S20 | | | C17 | 7.92636E-07 | C34 | -1.6758E-09 | C51 | -3.5813E-13 |
| | K | 0 | C19 | 8.89146E-06 | C36 | 1.45469E-09 | C53 | 6.84539E-13 |
| | C4 | 0.021458089 | C21 | -1.4324E-07 | C37 | -7.7649E-12 | C55 | -1.511E-12 |
| | C6 | 0.004154169 | C22 | -1.0382E-09 | C39 | -2.0012E-12 | C56 | 1.77674E-15 |
| | C8 | -0.00099953 | C24 | -1.4146E-08 | C41 | 5.28532E-11 | C58 | 5.96659E-15 |
| | C10 | -0.00011911 | C26 | -5.677E-08 | C43 | 2.30872E-11 | C60 | -2.0891E-15 |
| | C11 | 8.42605E-06 | C28 | 6.05026E-09 | C45 | 1.03045E-11 | C62 | -9.4541E-14 |
| | C13 | -6.6069E-06 | C30 | 2.65443E-11 | C47 | -1.2622E-13 | C64 | 1.01913E-13 |
| | C15 | -3.2455E-07 | C32 | -1.5185E-09 | C49 | 7.4513E-13 | C66 | -8.0588E-15 |
| S21 | | | C17 | -1.0996E-07 | C34 | 6.726E-11 | C51 | -1.0707E-13 |
| | K | 0 | C19 | 1.27907E-07 | C36 | 7.7809E-10 | C53 | -6.8789E-14 |
| | C4 | 0.016481821 | C21 | 1.59073E-07 | C37 | 1.78369E-12 | C55 | -1.3595E-12 |
| | C6 | 0.009814027 | C22 | -2.3156E-09 | C39 | 5.1641E-12 | C56 | -4.5963E-16 |
| | C8 | 0.000360473 | C24 | -1.533E-10 | C41 | 1.45879E-11 | C58 | -1.5431E-16 |
| | C10 | 0.000256882 | C26 | 6.12508E-09 | C43 | 4.21499E-12 | C60 | -9.4112E-15 |
| | C11 | -1.2641E-06 | C28 | 4.69033E-09 | C45 | 2.24112E-11 | C62 | -1.7181E-14 |
| | C13 | -7.1071E-06 | C30 | -3.0818E-11 | C47 | 5.4765E-14 | C64 | 1.14179E-14 |
| | C15 | -2.6709E-05 | C32 | -3.7474E-10 | C49 | 3.77477E-14 | C66 | -1.4481E-14 |
| S22 | | | C17 | -4.2509E-07 | C34 | 6.03428E-10 | C51 | -4.5666E-13 |
| | K | 0 | C19 | -2.8996E-07 | C36 | 2.79273E-10 | C53 | -1.1058E-13 |
| | C4 | 0.024865431 | C21 | 1.2041E-08 | C37 | -1.9296E-12 | C55 | -5.1945E-13 |
| | C6 | 0.013574823 | C22 | 4.59025E-09 | C39 | -4.3532E-12 | C56 | 5.15206E-16 |
| | C8 | 0.000656946 | C24 | 9.31761E-09 | C41 | -1.0393E-11 | C58 | 1.80646E-15 |
| | C10 | 0.00023588 | C26 | 3.01345E-08 | C43 | -1.737E-11 | C60 | -1.4435E-16 |
| | C11 | -9.5439E-06 | C28 | 2.56904E-08 | C45 | -6.9004E-13 | C62 | -1.1182E-14 |
| | C13 | -1.3485E-05 | C30 | 1.87694E-10 | C47 | -2.2366E-16 | C64 | 1.55635E-14 |
| | C15 | -3.0664E-05 | C32 | 1.26944E-10 | C49 | -1.2748E-13 | C66 | -1.4201E-14 |
| S23 | | | C17 | -9.3593E-10 | C34 | -4.9686E-14 | C51 | 1.8026E-18 |
| | K | 0 | C19 | -6.409E-10 | C36 | -5.1319E-14 | C53 | -8.6197E-18 |
| | C4 | 0.001494744 | C21 | 3.91751E-10 | C37 | -8.103E-17 | C55 | 1.1354E-17 |
| | C6 | 0.001287983 | C22 | 1.80884E-12 | C39 | 5.19251E-16 | C56 | 1.89778E-21 |
| | C8 | 1.19776E-05 | C24 | -8.191E-12 | C41 | 1.38639E-16 | C58 | -1.6083E-20 |
| | C10 | 1.18228E-05 | C26 | -7.7154E-12 | C43 | -9.0016E-16 | C60 | 9.98054E-21 |
| | C11 | -4.3922E-08 | C28 | 9.92084E-14 | C45 | 2.67935E-16 | C62 | 4.42337E-21 |
| | C13 | 3.28597E-08 | C30 | 4.90899E-14 | C47 | -1.5465E-18 | C64 | -1.4286E-20 |
| | C15 | 8.20779E-08 | C32 | -1.3332E-14 | C49 | 1.58291E-18 | C66 | 6.04404E-21 |

Further, in the following table 8 are shown the inclination of each surface and magnitude of eccentricity according to the second embodiment. In this table 8, the definitions for showing the values of "ADE" and "YDE" are as was mentioned above. The inclination of each surface according to the present embodiment is almost same to that of the previous embodiment 1.

Table 8

| Surface | ADE (°) | YDE(mm) |
|---------|---------|---------|
| S0 | -1.289 | 0.0 |
| S15 | 0.0 | -0.193 |
| S17 | 0.0 | 0.193 |
| S23 | 28.814 | 0.0 |

Further, in the table 8 mentioned above, from the "ADE (=θm) " of S23 and the "ADE (=θs) " of the screen surface 5, it is apparent that a compact optic system can be achieved, being small in the height below the screen, while fulfilling the condition mentioned above.

Also, since the value of the difference |L1-L2| of the optical pat, which is shown by the equation <Eq. 1> mentioned above, is 0.43 times large as the height of picture on the screen, and "θs" is 30 degrees, then the condition of the <Eq. 1> mentioned above is satisfied.

On the other hand, in this second embodiment, as is shown in the table 8 mentioned above, S15 is shifted or offset by -0.193 mm, on the contrary thereto, the surface S17 is shifted or offset by 0.193 mm. In case when offsetting a certain surface, the optical axis is shifted by an amount of offsetting on the surfaces thereafter. Accordingly, the offsetting on this S15 and S17 means that one (1) piece of lens, which is made up with the surfaces S15 and S16, is offset by -0.193 mm from the optical axis. This amount of offsetting is very small, and it does not cause ill influence, such as, enlarging the size of the lens, for example. This eccentricity enables to achieve a fine adjustment on asymmetric chromatic aberration (or chromatism).

Also, as can be seen from the tables 5 and 7 mentioned above, according to the present embodiment, it is apparent that the curvature "c" and the conic coefficients "k" are "0". Thus, the trapezoidal distortion, being generated due to the oblique incidence, is extremely large in the direction of the oblique incidence, but the amount thereof is small in the direction perpendicular to this. Accordingly, between the direction of the oblique incidence and the direction perpendicular to this, there must be provided functions greatly different from each other, and it is possible to compensate or correct the asymmetric aberration, preferably, without using the curvature "c" nor the conic coefficient "k", being rotationally symmetric and functioning in all directions.

As an effective region of the embodiment 2 with such the numerical values mentioned above, the region on the object surface is projected, enlargedly, upon the image surface. Thus, it is apparent that the object surface can be projected on a screen being fully large, enlargedly, even from a relatively near distance (Lp) , in other words, being superior in an enlarging ratio of projection.

<Embodiment 3>

Next, explanation will be made on a third embodiment, according to the present invention. Herein, also the front lens group 2 of the lens optic system is built up with the plural number of lenses, all of which have a refracting interface of rotationally symmetric configuration, and four (4) of the refracting interfaces of those lenses have aspheric surfaces, each being rotationally symmetric, and others have the spherical surfaces. The aspheric surface being rotationally symmetric, which is used therein, can be expressed by the equation <Eq. 2> mentioned above, with using a local cylindrical coordinates system for each surface. Also, the free curved surfaces building up the rear lens group 3 of the lens optic system mentioned above can be expressed by the equation <Eq. 3> mentioned above, including polynomials of X and Y, with applying the local coordinates system (x, y, z) assuming the apex on each surface to be the origin.

The following table 9 shows lends data of the third embodiment including numerical values thereof, wherein the surface numbers starting from S0, presenting the object surfaces, sequentially, further from S1 to S23. In this table 1, "Rd" is also the radius of curvature for each surface, and "TH" is the distance between the surfaces, i.e., presenting the distance from the apex of the lens surface to the apex of the next lens surface.

Table 9

| Surface | Rd | TH | nd | νd |
|---------|----|----|----|----|
| S0 | Infinity | 10.00 | | |

(continued)

| Surface | Rd | TH | nd | vd |
|---------|-----|------|---------|------|
| S1 | Infinity | 31.34 | 1.51827 | 48.0 |
| S2 | Infinity | 5.00 | | |
| S3 | 69.501 | 4.65 | 1.85306 | 17.2 |
| S4 | -477.064 | 18.00 | | |
| S5* | -54.329 | 9.00 | 1.49245 | 42.9 |
| S6* | -53.208 | 0.10 | | |
| S7 | 48.857 | 9.32 | 1.49811 | 60.9 |
| S8 | -29.376 | 2.50 | 1.76014 | 20.0 |
| S9 | 40.402 | 0.10 | | |
| S10 | 40.607 | 9.00 | 1.49811 | 60.9 |
| S11 | -54.359 | 25.90 | | |
| S12 | Infinity | 9.10 | | |
| S13 | 2090.112 | 6.00 | 1.85306 | 17.2 |
| S14 | -66.019 | 65.00 | | |
| S15 | -45.540 | 4.19 | 1.74702 | 33.2 |
| S16 | 108.965 | 9.00 | | |
| S17* | -37.449 | 10.00 | 1.49245 | 42.9 |
| S18* | -75.474 | 2.50 | | |
| S19# | Infinity | 8.00 | 1.49245 | 42.9 |
| S20# | Infinity | 19.35 | | |
| S21# | Infinity | 8.00 | 1.49245 | 42.9 |
| S22# | Infinity | 122.15 | | |
| S23# | Infinity | -605.00 | REFL | |

In this table 9, also the surfaces S5, S6, S17 and S18 are aspheric surfaces, being rotationally symmetric, and also in this table 9, they are attached with "*" beside the surface numbers for easy understanding thereof, wherein coefficients of the aspheric surface of those four (4) surfaces are shown in the table 10 below.

Table 10

| Surface | Aspheric Surface Coefficients | | | | | | | |
|---------|---|-------------|---|-------------|---|-------------|---|-------------|
| S5 | K | -13.108806 | C | 1.46508E-11 | F | -2.0555E-19 | J | 8.25281E-27 |
| | A | -2.4809E-06 | D | -3.1244E-14 | G | -2.06E-22 | | |
| | B | 1.95435E-08 | E | -1.5302E-16 | H | -7.5179E-25 | | |
| S6 | K | -8.59084843 | C | 1.51155E-11 | F | -1.6279E-19 | J | 1.22719E-20 |
| | A | 7.67114E-07 | D | -4.743E-15 | G | -1.8394E-21 | | |
| | B | 9.20816E-09 | E | -9.3745E-17 | H | 3.4992E-24 | | |
| S17 | K | 3.170476396 | C | -4.2843E-12 | F | 1.18119E-18 | J | 2.06192E-26 |
| | A | -8.7308E-06 | D | 1.96465E-13 | G | -4.5716E-21 | | |
| | B | -3.8136E-08 | E | 7.89179E-16 | H | -1.5681E-23 | | |

(continued)

| Surface | Aspheric Surface Coefficients | | | | | | | |
|---|---|---|---|---|---|---|---|---|
| | K | 9.315246698 | C | 2.51005E-11 | F | -5.9791E-20 | J | 3.13406E-28 |
| S18 | A | -4.2604E-06 | D | 3.09426E-14 | G | -6.6563E-23 | | |
| | B -1,5518E-08 | | E | -8.892E-18 | H | 7.14735E-26 | | |

Also, S19 to S22 in the table 9 mentioned above are the refraction surfaces, each having the free curved surface configuration, which builds up the rear lens group of the lens optic system mentioned above, and S23 is the reflection surface having the free curved surface configuration S23 of the reflection optic system, wherein they are shown by attaching "#" beside the surface numbers thereof. Values of the coefficients for presenting the configurations of those five (5) free curved surfaces are shown in the table 11 below.

Table 11

| Surface | Free Curved Surface Coefficients | | | | | | | |
|---|---|---|---|---|---|---|---|---|
| | | | C17 | 3.43096E-07 | C34 | -2.7065E-10 | C51 | 1.990777E-13 |
| | K | 0 | C19 | 2.13857E-06 | C36 | 1.31926E-09 | C53 | -5.2135E-12 |
| | C4 | 0.00503963 | C21 | 9.15856E-08 | C37 | 2.1077E-12 | C55 | -2.1831E-12 |
| | C6 | 0.020700865 | C22 | -1.9441E-09 | C39 | -6.1349E-11 | C56 | -3.3204E-15 |
| S19 | C8 | -0.0007276 | C24 | -9.6181E-09 | C41 | -6.9182E-11 | C58 | 1.52276E-14 |
| | C10 | -0.00062901 | C26 | 2.71279E-09 | C43 | -1.1634E-10 | C60 | 4.722E-14 |
| | C11 | 4.83792E-06 | C28 | 1.5813E-08 | C45 | 1.55247E-11 | C62 | 3.79581E-14 |
| | C13 | 1.58097E-05 | C30 | -4.1204E-10 | C47 | 1.79452E-14 | C64 | 3.11821E-14 |
| | C15 | -1.9636E-05 | C32 | -2.3107E-09 | C49 | -6.0452E-13 | C66 | -1.876E-13 |
| | | | C17 | 6.40078E-08 | C34 | -1.0668E-09 | C51 | -4.5767E-13 |
| | K | 0 | C19 | 2.35312E-06 | C36 | -3.2106E-10 | C53 | -3.1387E-12 |
| | C4 | -0.00417899 | C21 | 9.31605E-07 | C37 | 1.82824E-12 | C55 | 1.09346E-12 |
| | C6 | 0.031326266 | C22 | -5.0811E-10 | C39 | -2.9101E-11 | C56 | -1.6513E-15 |
| S20 | C8 | -0.00077771 | C24 | -3.1548E-08 | C41 | 1.04208E-10 | C58 | 8.47256E-15 |
| | C10 | -0.00097819 | C26 | -8.825E-08 | C43 | 7.01421E-11 | C60 | -1.694E-15 |
| | C11 | 2.05947E-06 | C28 | 3.84368E-08 | C45 | -1.0493E-10 | C62 | -1.7011E-13 |
| | C13 | 2.31241E-05 | C30 | -9.4717E-11 | C47 | 2.95795E-14 | C64 | 6.71828E-14 |
| | C15 | -3.0456E-05 | C32 | -8.4146E-10 | C49 | -7.9902E-13 | C66 | 1.92712E-14 |
| | | | C17 | -1.4263E-07 | C34 | -1.7091E-10 | C51 | -4.2269E-14 |
| | K | 0 | C19 | -3.1384E-08 | C36 | -2.9029E-10 | C53 | 2.21959E-14 |
| | C4 | 0.016712489 | C21 | 3.78605E-07 | C37 | 2.14998E-13 | C55 | -9.5144E-15 |
| | C6 | 0.024854646 | C22 | 7.83561E-10 | C39 | 1.12281E-12 | C56 | -1.3876E-16 |
| S21 | C8 | 0.000280556 | C24 | -1.1076E-09 | C41 | 3.49849E-12 | C58 | -2.0224E-16 |
| | C10 | -5.99E-05 | C26 | -5.1644E-09 | C43 | 2.81764E-12 | C60 | 4.00029E-17 |
| | C11 | -4.5381E-06 | C28 | -1.9091E-09 | C45 | -1.5444E-12 | C62 | -4.1764E-15 |
| | C13 | -7.3701E-06 | C30 | 2.60008E-11 | C47 | -3.3945E-15 | C64 | 1.05212E-15 |
| | C15 | -1.0002E-05 | C32 | 2.73923E-11 | C49 | 2.75972E-14 | C66 | -3.6542E-15 |

(continued)

| Surface | | | | Free Curved Surface Coefficients | | | | |
|---|---|---|---|---|---|---|---|---|
| | | | C17 | -1.7327E-07 | C34 | -3.122E-10 | C51 | -3.8555E-14 |
| | K | 0 | C19 | -1.5061E-07 | C36 | -6.1374E-10 | C53 | 2.368E-13 |
| | C4 | 0.016645995 | C21 | 5.38912E-07 | C37 | 9.78887E-14 | C55 | 1.87115E-13 |
| | C6 | 0.021101685 | C22 | 8.11263E-10 | C39 | 1.08112E-12 | C56 | -9.9798E-17 |
| S22 | C8 | 0.00032094 | C24 | -1.1477E-10 | C41 | 3.69407E-12 | C58 | -2.3837E-16 |
| | C10 | -5.1172E-05 | C26 | -4.8707E-09 | C43 | -5.8299E-13 | C60 | -2.2734E-16 |
| | C11 | -4.3183-06 | C28 | -1.1809E-09 | C45 | -3.7079E-12 | C62 | -3.0547E-15 |
| | C13 | -8.5909E-06 | C30 | 3.39643E-11 | C47 | -2.9359E-15 | C64 | 5.55175E-15 |
| | C15 | -1.0155E-05 | C32 | 1.47622E-10 | C49 | -5.9302E-15 | C66 | -1.0145E-15 |
| | | | C17 | -2.203E-09 | C34 | 8.2099E-14 | C51 | -1.2799E-17 |
| | K | 0 | C19 | 2.39237E-09 | C36 | -4.3614E-14 | C53 | 4.0335E-18 |
| | C4 | 0.002149003 | C21 | 1.39506E-09 | C37 | -1.7915E-16 | C55 | -3.2746E-18 |
| | C6 | 0.000317113 | C22 | 4.22192E-12 | C39 | 1.80308E-15 | C56 | 3.626098E-21 |
| S23 | C8 | 2.85992E-05 | C24 | -3.3322E-11 | C41 | -2.7999E-15 | C58 | -3.5037E-20 |
| | C10 | 9.52914E-06 | C26 | 1.45814E-11 | C43 | 7.24461E-16 | C60 | 6.79833E-20 |
| | C11 | -8.2644E-08 | C28 | 1.00262E-11 | C45 | -1.0528E-15 | C62 | -3.7507E-20 |
| | C13 | 2.89938E-07 | C30 | 1.34005E-13 | C47 | -4.0973E-18 | C64 | 5.06597E-21 |
| | C15 | 1.20082E-07 | C32 | -3.6767E-13 | C49 | 1.4053E-17 | C66 | 5.93238E-21 |

Further, in the following table 12 are shown the inclination of each surface and magnitude of eccentricity according to the third embodiment. In this table 12, the definitions for showing the values of "ADE" and "YDE" are as was mentioned above.

Table 12

| Surface | ADE (°) | YDE (mm) |
|---|---|---|
| S0 | -2.000 | 0.0 |
| S15 | 0.0 | 0.304 |
| S17 | 0.0 | -0.304 |
| S23 | 35.000 | 0.0 |

From this table 12, it can be seen that this does not fulfill the condition mentioned above.However,with this third embodiment, it has the structures, being small in the depth thereof, i.e., having priority of the depth.

Also, as is shown in the table 12, similar to the embodiment 2 mentioned above, one (1) piece of lens, which is made up with the surfaces S15 and S16, is offset by -0.304 mm from the optical axis. This amount of offsetting is very small, and it does not cause ill influence, such as, enlarging the size of the lens, for example. This eccentricity enables to achieve a fine adjustment on asymmetric chromatic aberration (or chromatism).

Further, since the value of the difference |L1-L2| of the optical pat, which is shown by the equation < Eq. 1> mentioned above, is 0.62 times large as the height of picture on the screen, and "θs" is 45 degrees, then this satisfies the condition mentioned above.

Also, from the tables 9 and 11 mentioned above, according to this third embodiment, it is apparent that the curvature "c" and the conic coefficients "k" are "0". Thus, the trapezoidal distortion, being generated due to the oblique incidence, is extremely large in the direction of the oblique incidence, but the amount thereof is small in the direction perpendicular to this. Accordingly, between the direction of the oblique incidence and the direction perpendicular to this, there must be provided functions greatly different from each other, and it is possible to compensate or correct the asymmetric aberration, preferably, without using the curvature "c" nor the conic coefficient "k", being rotationally symmetric and functioning in all directions.

Also, as an effective region of the embodiment 3, the region on the object surface is projected, enlargedly, upon the image surface. Thus, it is also apparent that the object surface can be projected on a screen being fully large, enlargedly, even from a relatively near distance (Lp), i.e., being superior in an enlarging ratio of projection.

<Embodiment 4>

Explanation will be made on a fourth embodiment, according to the present invention, by referring tables 13 to 16. Herein. also the light emitting from the image display element 1 is reflected upon the reflection surface 4 of the reflection optic system, which has the free curved surface configuration, thereby to be incident upon the screen 5, after passing through in the order, i.e., the front lens group 2 of the lens optic system, which is built up with the transmission-type lenses having the rotationally symmetric surface configuration and the rear lens group of the lens optic system, which is built up with the transmission-type lenses having the free curved surface configuration.

Thus, herein, also the front lens group 2 of the lens optic system is built up with the plural number of lenses, all of which have a refracting interface of rotationally symmetric configuration, and four (4) of the refracting interfaces of those lenses have aspheric surfaces, each being rotationally symmetric, and others have the spherical surfaces. The aspheric surface being rotationally symmetric, which is used therein, can be expressed by the equation <Eq. 1> mentioned above, with using a local cylindrical coordinates system for each surface. Also, the free curved surfaces building up the rear lens group 3 of the lens optic system mentioned above can be expressed by the equation <Eq. 2> mentioned above, including polynomials of X and Y, with applying the local coordinates system (x, y, z) assuming the apex on each surface to be the origin.

The following table 13 shows lends data of the fourth embodiment including numerical values thereof, wherein the surface numbers starting from S0, presenting the object surfaces, sequentially, further from S1 to S24, and S25 is the image surface. In this table 1, "Rd" is also the radius of curvature for each surface, and "TH" is the distance between the surfaces, i.e., presenting the distance from the apex of the lens surface to the apex of the next lens surface.

Table 13

| Surface | Rd | TH | nd | vd |
|---|---|---|---|---|
| S0 | Infinity | 10.00 | | |
| S1 | Infinity | 31.34 | 1.51827 | 48.0 |
| S2 | Infinity | 4.97 | | |
| S3 | 49.017 | 4.65 | 1.85306 | 17.2 |
| S4 | 201.672 | 18.00 | | |
| S5* | -60.233 | 9.00 | 1.49245 | 42.9 |
| S6* | -55.360 | 0.10 | | |
| S7 | 56.669 | 9.32 | 1.49811 | 60.9 |
| S8 | -27.651 | 2.50 | 1.76014 | 20.0 |
| S9 | 46.949 | 0.10 | | |
| S10 | 47.407 | 9.00 | 1.49811 | 60.9 |
| S11 | -46.359 | 25.90 | | |
| S12 | Infinity | 9.10 | | |
| S13 | -9457.081 | 6.00 | 1.85306 | 17.2 |
| S14 | -64.870 | 65.00 | | |
| S15 | -42.429 | 4.19 | 1.74702 | 33.2 |
| S16 | 137.716 | 9.00 | | |
| S17* | -34.874 | 10.00 | 1.49245 | 42.9 |
| S18* | -63.364 | 2.50 | | |

(continued)

| Surface | Rd | TH | nd | νd |
|---------|------|--------|---------|------|
| S19# | Infinity | 8.00 | 1.49245 | 42.9 |
| S20# | Infinity | 19.55 | | |
| S21# | Infinity | 8.00 | 1.49245 | 42.9 |
| S22# | Infinity | 121.95 | | |
| S23# | Infinity | -742.00 | REFL | |

In this table 13, "TH" is the distance between the surfaces, i.e., presenting the distance from the apex of the lens surface to the apex of the next lens surface. The distance between the surfaces is presented by a positive value in case when the next lens surface is at the left-hand side, while by a negative value in case when it is at the right-hand side, with respect to that lens surface.

In this table 13, S5, S6, S17 and S18 are aspheric surfaces, being rotationally symmetric, and also in this table 13, they are attached with "*" beside the surface numbers for easy understanding thereof, wherein coefficients of the aspheric surface of those four (4) surfaces are shown in the table 14 below.

Table 14

| Surface | Aspheric Surface Coefficients | | | | | | | |
|---------|---|------------|---|------------|---|------------|---|------------|
| S5 | K | -7.49933947 | C | 8.20794E-12 | F | 1.67212E-19 | J | 2.75191E-26 |
| | A | -4.2871E-06 | D | -3.3905E-14 | G | 1.22978E-22 | | |
| | B | 1.47929E-08 | E | 5.30418E-18 | H | -9.2584E-24 | | |
| S6 | K | -5.10683146 | C | 2.31215E-12 | F | 1.4876E-19 | J | 1.4023E-26 |
| | A | -4.215E-08 | D | -8.8141E-15 | G | -2.1285E-21 | | |
| | B | 9.97857E-09 | E | 2.96852E-17 | H | 3.39217E-25 | | |
| S17 | K | 2.729972673 | C | -6.3329E-11 | F | -5.5239E-19 | J | 2.95633E-25 |
| | A | -6.7402E-06 | D | 3.24143E-13 | G | -2.1415E-20 | | |
| | B | -1.1095E-08 | E | 1.38117E-15 | H | -4.6503E-23 | | |
| S18 | K | 5.628556104 | C | 2.5008E-11 | F | -6.694E-20 | J | 4.08388E-28 |
| | A | -1.8686E-06 | D | 1.72887E-14 | G | -5.6024E-23 | | |
| | B | -1,1602E-08 | E | -2.9081E-17 | H | 5.15556E-26 | | |

Also, S19 to S22 in the table 13 mentioned above are the refraction surfaces, each having the free curved surface configuration, which builds up the rear lens group of the lens optic system mentioned above, and S23 is the reflection surface having the free curved surface configuration S23 of the reflection optic system, wherein they are shown by attaching "#" beside the surface numbers thereof. Values of the coefficients for presenting the configurations of those five (5) free curved surfaces are shown in the table 15 below.

Table 15

| Surface | Free Curved Surface Coefficients | | | | | | |
|---------|------|------------|-----|------------|-----|------------|-----|
| | | | C17 | 3.06092E-07 | C34 | -1.504E-09 | C51 | 1.89916E-12 |
| | K | 0 | C19 | 2.13689E-06 | C36 | 9.24213E-10 | C53 | -2.6408E-12 |
| | C4 | -0.00523704 | C21 | 3.17855E-07 | C37 | 2.73895E-12 | C55 | -2.2305E-12 |
| | C6 | 0.022327058 | C22 | -2.18E-09 | C39 | -5.7332E-11 | C56 | -2.3991E-15 |
| S19 | C8 | -0.00076156 | C24 | -1.35E-08 | C41 | -6.5197E-11 | C58 | 2.74339E-14 |
| | C10 | -0.00059005 | C26 | -4.4124E-09 | C43 | -1.4335E-10 | C60 | 9.09554E-14 |
| | C11 | 4.88728E-06 | C28 | 2.72086E-08 | C45 | -2.1121E-11 | C62 | 2.42098E-14 |
| | C13 | 1.92499E-05 | C30 | -4.0242E-10 | C47 | 4.94771E-14 | C64 | 1.85581E-13 |
| | C15 | -1.9167E-05 | C32 | -2.6688E-09 | C49 | 5.78829E-13 | C66 | -1.2907E-13 |
| | | | C17 | 4.41515E-08 | C34 | -2.1067E-09 | C51 | 1.36481E-13 |
| | K | 0 | C19 | 2.59357E-06 | C36 | -1.3645E-09 | C53 | -1.7814E-12 |
| | C4 | -0.00380713 | C21 | 1.34672E-06 | C37 | 2.5542E-12 | C55 | 1.48598E-12 |
| | C6 | 0.034310744 | C22 | -6.3335E-10 | C39 | -3.0724E-11 | C56 | -1.1411E-15 |
| S20 | C8 | -0.00082075 | C24 | -3.2842E-08 | C41 | 9.742992E-11 | C58 | 1.71485E-14 |
| | C10 | -0.00096306 | C26 | -9.4354E-08 | C43 | 5.80355E-11 | C60 | 1.60064E-14 |
| | C11 | 1.96478E-06 | C28 | 5.63114E-08 | C45 | -1.3903E-10 | C62 | -1.6566E-13 |
| | C13 | 2.57064E-05 | C30 | -1.5828E-10 | C47 | 7.97383E-14 | C64 | 1.4173E-13 |
| | C15 | -3.3719E-05 | C32 | -9.3186E-10 | C49 | -2.2316E-13 | C66 | 5.3295E-14 |
| | | | C17 | -1.4847E-07 | C34 | -1.578E-10 | C51 | -3.1391E-14 |
| | K | 0 | C19 | -4.1463E-08 | C36 | -3.154E-10 | C53 | 4.92021E-14 |
| | C4 | 0.01628158 | C21 | 3.75928E-07 | C37 | 1.44753E-13 | C55 | -1.2229E-14 |
| | C6 | 0.024536292 | C22 | 8.73333E-10 | C39 | 1.02001E-12 | C56 | -1.1929E-16 |
| S21 | C8 | 0.000287791 | C24 | -1.3318E-09 | C41 | 4.04083E-12 | C58 | -1.9881E-16 |
| | C10 | -5.6467E-05 | C26 | -5.0191E-09 | C43 | 2.15125E-12 | C60 | -1.1661E-16 |
| | C11 | -4.4889E-06 | C28 | -1.338E-09 | C45 | 1.05501E-13 | C62 | -3.9789E-15 |
| | C13 | -7.4216E-06 | C30 | 2.11331E-11 | C47 | -1.2171E-15 | C64 | 1.92077E-15 |
| | C15 | -9.5063E-06 | C32 | 3.73498E-11 | C49 | 1.57629E-14 | C66 | -5.4374E-15 |
| | | | C17 | -1.7539E-07 | C34 | -2.5651E-10 | C51 | -3.1411E-14 |
| | K | 0 | C19 | -1.5271E-07 | C36 | -6.0608E-10 | C53 | 2.14522E-13 |
| | C4 | 0.016419443 | C21 | 5.09788E-07 | C37 | 1.26957E-13 | C55 | 1.76045E-13 |
| | C6 | 0.021115451 | C22 | 7.02901E-10 | C39 | 1.00917E-12 | C56 | -9.5762E-17 |
| S22 | C8 | 0.000323178 | C24 | -1.3689E-10 | C41 | 3.91234E-12 | C58 | -2.6471E-16 |
| | C10 | -4.5525E-05 | C26 | -4.0137E-09 | C43 | -1.1163E-12 | C60 | -2.2728E-16 |
| | C11 | -4.138E-06 | C28 | 1.70813E-10 | C45 | -4.4694E-12 | C62 | -3.086E-15 |
| | C13 | -9.223E-06 | C30 | 2.82551E-11 | C47 | -7.7346E-16 | C64 | 5.99803E-15 |
| | C15 | -9.9105E-06 | C32 | 1.42902E-10 | C49 | -1.20512E-14 | C66 | -1.1247E-15 |

(continued)

| Surface | Free Curved Surface Coefficients | | | | | | | |
|---------|------|-----------|-----|-------------|-----|--------------|-----|--------------|
| | | | C17 | -2.5231E-09 | C34 | 7.66238E-14 | C51 | -2.3328E-17 |
| | K | 0 | C19 | 2.58369E-09 | C36 | 3.37658E-15 | C53 | 1.85177E-17 |
| | C4 | 0.002289792 | C21 | 1.24861E-09 | C37 | -1.5632E-16 | C55 | -4.0416E-18 |
| | C6 | 0.000330451 | C22 | 4.81491E-12 | C39 | 2.15761E-15 | C56 | 1.15938E-21 |
| S23 | C8 | 3.09058E-05 | C24 | -3.7371E-11 | C41 | -3.7026E-15 | C58 | -3.3248E-20 |
| | C10 | 1.02245E-05 | C26 | 1.56104E-11 | C43 | 1.35291E-15 | C60 | 7.75597E-20 |
| | C11 | -9.5057E-08 | C28 | 7.8498E-12 | C45 | -3.329E-16 | C62 | -8.1537E-20 |
| | C13 | 3.1048E-07 | C30 | 1.56487E-13 | C47 | -4.2776E-18 | C64 | 8.41917E-20 |
| | C15 | 1.27367E-07 | C32 | -4.1734E-13 | C49 | 1.73654E-17 | C66 | -2.3609E-20 |

Further, in the following table 16 are shown the inclination of each surface and magnitude of eccentricity according to the second embodiment. In this table 16, the definitions for showing the values of "ADE" and "YDE" are as was mentioned above. The inclination of each surface according to the present embodiment is almost same to that of the previous embodiment 1.

Table 16

| Surface | ADE(°) | YDE(mm) |
|---------|--------|---------|
| S0 | -2.000 | 0.0 |
| S15 | 0.0 | 0.230 |
| S17 | 0.0 | -0.230 |
| S23 | 35.000 | 0.0 |

Thus, from this table 16, it can be seen that this does not fulfill the condition mentioned above. However, with this third embodiment, it has the structures, being small in the depth thereof, i.e., having priority of the depth.

On the other hand, with this fourth embodiment, as is shown in the table 16, the surface S15 is offset by 0.23 mm, while offsetting the surface S17 by 0.23 mm contrarily. In case when offsetting a certain surface, the optical axis is shifted by an amount of offsetting on the surfaces thereafter. Accordingly, the offsetting on this S15 and S17 means that one (1) piece of lens, which is made up with the surfaces S15 and S16, is offset by -0.193 mm from the optical axis. This amount of offsetting is very small, and it does not cause ill influence, such as, enlarging the size of the lens, for example. This eccentricity enables to achieve a fine adjustment on asymmetric chromatic aberration (or chromatism).

Further, since the value of the difference |L1-L2| of the optical pat, is 0.64 times large as the height of picture on the screen, and "θs" is 45 degrees, then this satisfies the condition of <Eq. 1> mentioned above.

Also, seeing from the tables 13 and 15 mentioned above, according to this fourth embodiment, it is apparent that the curvature "c" and the conic coefficients "k" are "0". Thus, the trapezoidal distortion, being generated due to the oblique incidence, is extremely large in the direction of the oblique incidence, but the amount thereof is small in the direction perpendicular to this. Accordingly, between the direction of the oblique incidence and the direction perpendicular to this, there must be provided functions greatly different from each other, and it is possible to compensate or correct the asymmetric aberration, preferably, without using the curvature "c" nor the conic coefficient "k", being rotationally symmetric and functioning in all directions.

Further, as an effective region of the present embodiment, the region on the object surface is projected, enlargedly, upon the image surface. Thus, it is apparent that the object surface can be projected on a screen being fully large, enlargedly, even from a relatively near distance (Lp), i.e., being superior in an enlarging ratio of projection.

As was mentioned above, according to the image projection apparatus of the present invention, since there is no necessity of shifting the lens (s) used therein (i.e., no eccentricity), as is in the conventional art, there is provided the image projection apparatus, for enabling the wide angle and also for suppressing the distortion down to the minimum even when changing the position or distance up to the screen, but without necessity of the additional optic system having large aperture, and further being relatively easy in the manufacturing thereof. And, according to the present invention, with projection of the picture (i.e., the image) from such the image projection apparatus onto the screen, it is possible to obtain a preferable projection image, suppressing the distortion and/or the aberration down to the minimum as a whole, on the said screen, i.e., a large screen, and thereby achieving superior performances.

By the way, with the image projection apparatus, applying therein the projection optic unit, the details of which was mentioned above, there is a problem in case when changing the projection distance from that projection optic unit to the screen; i.e., the graphic distortion comes and also the spot size thereof come to be large when changing the projection distance, largely from the distance designed, and thereby deteriorating the performance of image resolution.

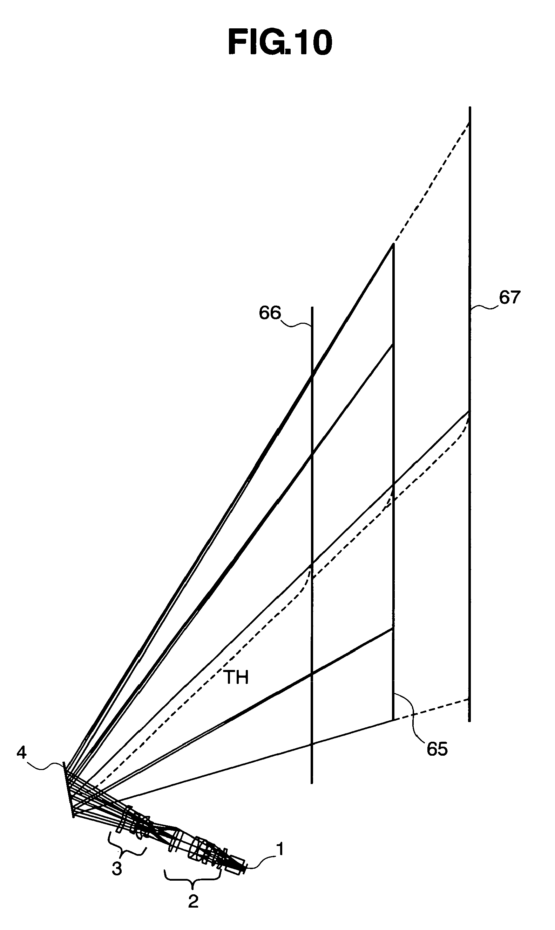

For example, as is shown in Fig. 10 mentioned above, the spot configuration and the condition of distortion are deteriorated in case when locating the position of the screen 5 from the design position 65 (i.e., the screen size designed corresponding to 80 inches, for example) to the position 66 in the direction of reducing the projection screen (for example, corresponding to 60 inches screen size). For example, when positioning it at a position 67 in direction of enlarging the screen (for example, corresponding to 100 inches screen size), the spot configuration and the distortion thereof come to be large, such as, about 2% of the height of the screen, and in particular, the spot configuration comes to be as three (3) times large as that when it is at the design position; i.e., deteriorating the performance of resolution.

However, within above-mentioned the projection optic unit, being rotationally asymmetric, it is impossible to correct or compensate the distortion of this spot configuration with movement of the rotationally symmetric lens(es). Then, according to the projection optic unit within the image projection apparatus of the present invention, the compensation is made by moving the transmission-type lenses 31 and 32, each having the free curved surface, together with the lenses 33 and34, each having the negative power and building up the rear lens group mentioned above, into the direction of the optical axis thereof.

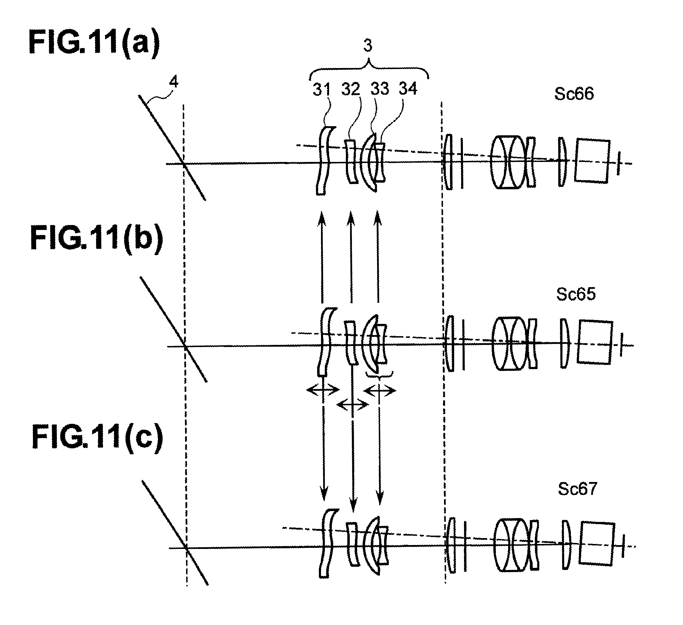

As is shown in Figs. 11 (a) to 11(c) attached herewith, the lenses building up the rear lens group 3 mentioned above, i.e., the transmission-type lenses 31 and 32, each having the free curved surface, and also the two (2) pieces of transmission-type lenses 31 and 32, each having the negative power and being rotationally symmetric, are moved. Thus, Fig. 11 (a) shows the case when disposing the projection screen at the position 66 for reducing the projection screen (i.e., corresponding to 60 inches screen size) in Fig. 10 mentioned above, Fig. 11 (b) the case when disposing the projection screen at the design position 65 (i.e., corresponding to 80 inches screen size), and Fig. 11 (c) the case when disposing the projection screen at the design position 67 for enlarging the screen, respectively. Thus, in this embodiment, with respect to the movement of the screen position, one (1) pieces of lens group is made up with the lens group of combining the lenses, each having the negative power and building up the rear lens group 3 mentioned above, as well as, the rotationally symmetric lenses in the vicinity thereof, in one body, and the two (2) pieces of the transmission-type lenses, each having the free curved surface, and this lens group is moved in the direction of the optical axis, so as to adjust it to the screen position, and thereby enabling to obtain preferable performances between the positions from 66 to 67 of the screen.

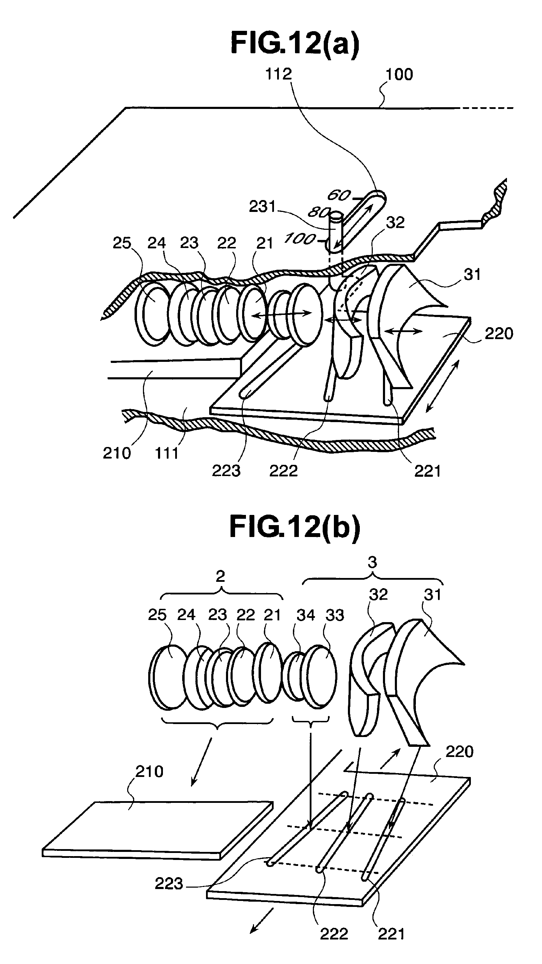

However, as was mentioned above, as mechanisms for moving the lenses 31 to 34 building up the rear lens group 3 mentioned above, for example, as is shown in Fig. 12 (a), the above-mentioned front lens group 2 (i.e., the rotationally symmetric lenses 21 to 25) and the rear lens group 3 (i.e., the lenses 31 to 34) are mounted on loading plates or bases 210 and 220 separated, within an inside of a housing 100 of the apparatus. And, while fixing one, i.e., the loading base 210, on a bottom portion 111 of the housing 100 of the apparatus, the other, i.e., the loading base 220 is attached on a rail (s) to be slidable thereon, for example. Also, from the other loading base 220, a rod-like member 231 is extended upwards, for example, thereby protruding it into an outside of the housing 100, through a slit portion 112, which is formed on an upper surface thereof. And, on this other loading base (for example, the loading base 220) are formed gutters 221, 222 and 223, in advance. Thus, the said loading base 220 is set up within the apparatus to be movable with respect to the loading base 210 mentioned above (in this example, into the direction perpendicular to the optical axis of the lens group, as is shown by an arrow in the figure)

However, with the lenses 31 to 34, each building up the rear lens group 3 mentioned above, as is shown in Fig. 12 (b), the lenses 33 and 34 are combined together as a unit (or, in one body), i.e., being divided into three (3) groups, the lens 31, the lens 32 and the lenses 33 and 34, and the position of each of them is moved corresponding to the screen sizes (i.e., 60 inches, 80 inches and 100 inches), which can be obtained by projecting on the screen. Thus, the gutters 221, 222 and 223 mentioned above are formed to be inclined at a desired angle with respect to the each lens group, i.e., corresponding to those three (3) groups of lenses. With such the structures, by moving the rod member 231, protruding into the outside of the housing from the movable loading base 220 mentioned above, to the positions where marks, such as, "60" inches, "80" inches, and "100" inches, etc., are attached on the surface of the housing 110, in advance, the three (3) lens groups mentioned above, i.e., the lens 31, the lens 32 and the lenses 33 and 34 are moved along the gutters 221, 222 and 223, and thereby being disposed at the desired position, respectively. Thus, with such the structures, it is possible to change the sizes of the projection image or screen, by moving a tip of the rod-like member 231 into the direction of the arrow in the figure, from an outside of the projection-type image projection apparatus, but without accompanying the distortion of the spot configuration and/or the deterioration of the performance, i.e., the resolution.

Or, in the place of the structures mentioned above, though not shown in the figure, but it is also possible to achieve the similar function to that mentioned above, with using a cylinder, upon the outer periphery of which are also forearmed such the gutters as was mentioned. However, in that case, there is no necessity to accompany rotation thereof, in particular, for the two (2) pieces of the transmission-type lenses 31 and 32, each having the free curved surface, within the rear lens group 3, irrespective of changes of the relative position in the direction of the optical axis thereof. From this fact, it is preferable to apply such structures that a cylindrical member can be rotated, independently, from each other; i.e., it is divided into a front end side and a rear end side, while the front end side is not rotatable. Further, with using a driving means, such as, an electric motor, etc. , for example, it is also possible to apply the structures of moving the lenses (i.e., lenses 31 to 34) of the rear lens group 3, respectively. Thus, with this, it is possible to obtain an effect of improving the distortion of the spot configuration and/or the performances of the resolution thereof, corresponding to the changes of the position of the screen, on which the image is projected (i.e., the distance from the apparatus up to the screen).

Further, with the embodiments mentioned above, as is shown in Fig. 2 mentioned above, the explanation was given that the above-mentioned free-curved surface mirror 600 is attached to be rotatable around the bearing portion 111, which is formed in a portion of the housing 100 of the above-mentioned image projection apparatus, together with a plate-like member 610. However, the present invention should not be restricted to this, and for example, the plate-like member 610 mentioned above, or a pair of rod-like members, in the place thereof, may be attached to be slidable in a lower portion of the housing 100, thereby enabling the said free-curved surface mirror 600 to be pulled up, so as to be set up at the predetermined position thereof.

While we have shown and described several embodiments in accordance with our invention, it should be understood that disclosed embodiments are susceptible of changes and modifications without departing from the scope of the invention. Therefore, we do not intend to be bound by the details shown and described herein but intend to cover all such changes and modifications that fall within the ambit of the appended claims, as interpreted by the description and drawings.

**Claims**

1.   An image projection apparatus for projecting an image on an image display element, enlargedly, comprising:

   a housing having an about box-like shape thereof;
   a light source portion, being disposed within an inside of said housing, and having a light source therein;
   a light modulation unit, being disposed within an inside of said housing, and for forming an image light by modulating a light from said light source through said image display element; and
   a projection optic unit, being disposed within an inside of said housing, and for projecting the image light from said light modulation unit, enlargedly, wherein
   said projection optic unit has a lens group including a plural number of lens elements, which are disposed symmetrically with respect to an optical axis, and a lens element having a configuration asymmetric with respect to said optical axis, sequentially, directing from said image display element towards projection of the light, and further
   there is provided a reflection mirror, being attached in a part of said housing, to be set up at a predetermined position along with the optical axis of said projection optic unit within an outside of said housing, and thereby reflecting the image light emitted from said projection optic unit, and further said reflection mirror has an free-curved surface configuration being asymmetric with respect to the optical axis of said projection optic unit.

2.   The image projection apparatus described in the claim 1, wherein said reflection mirror is mechanically combined with to be movable with respect to said housing.

3.   The image projection apparatus described in the claim 1, further comprising an electric power source portion within an inside of said housing, wherein plane sizes of said about box-like shaped housing is within 30cm x 30cm.

4.   The image projection apparatus described in the claim 1, wherein an optical axis of said light source unit and an optical axis of said light modulation unit are inclined with each other by a predetermined angle.

# FIG.1

FIG.2

100

400

600

610

612

600

# FIG.3

EP 1 925 960 A2

# FIG.4

# FIG.5

EP 1 925 960 A2

**FIG.6(a)**

Z

CROSS-SECTION
IN VERTICAL
DIRECTION

**FIG.6(b)**

CROSS-SECTION
IN HORIZONTAL
DIRECTION

S23

S22    S20   S18  S16    S14  S12  S10  S8  S6  S4    S2    S0
   S21    S19   S17    S15   S13   S11  S9  S7  S5  S3    S1

EP 1 925 960 A2

# FIG.7

CROSS-SECTION
IN VERTICAL
DIRECTION

S23

S22

S21

S20
S19
S18

S17
S16
S15

S14

S13

S11
S12
S10

S9
S8

S5
S6
S7

S4

S3

S2

S1

S0

EP 1 925 960 A2

# FIG.8

# FIG.9

EP 1 925 960 A2

# FIG.10

34

# FIG.11(a)

# FIG.11(b)

# FIG.11(c)

# FIG.12(a)

# FIG.12(b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006259252 A
- JP HEI5134213 A

- JP 2000162544 A
- JP 2004157560 A